(19) Europäisches Patentamt / European Patent Office / Office européen des brevets

(11) **EP 4 591 556 B1**

(12) **EUROPEAN PATENT SPECIFICATION**

(45) Date of publication and mention
of the grant of the patent:
**01.04.2026 Bulletin 2026/14**

(21) Application number: **22790031.3**

(22) Date of filing: **22.09.2022**

(51) International Patent Classification (IPC):
**H04L 67/12** *(2022.01)*

(52) Cooperative Patent Classification (CPC):
**H04L 67/12**

(86) International application number:
**PCT/IB2022/058979**

(87) International publication number:
**WO 2024/062274 (28.03.2024 Gazette 2024/13)**

(54) **MQTT AND MDNS FOR AVAILABILITY OF EDGE COMPUTING APPLICATION**

MQTT UND MDNS ZUR VERFÜGBARKEIT EINER EDGE-COMPUTING-ANWENDUNG

MQTT ET MDNS POUR LA DISPONIBILITÉ D'UNE APPLICATION INFORMATIQUE EN PÉRIPHÉRIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.07.2025 Bulletin 2025/31**

(73) Proprietor: **Telefonaktiebolaget LM Ericsson
(publ)
164 83 Stockholm (SE)**

(72) Inventors:
• **MUTHUCUMARU, Maheswaran**
**Pierrefonds, Québec H8Y 2E4 (CA)**
• **THEPIE FAPI, Emmanuel**
**Québec H4W 2B1 (CA)**
• **ZHU, Zhongwen**
**Saint-Laurent, Québec H4R 3H7 (CA)**
• **XU, Zhelin**
**Montreal, Québec H3G 0G4 (CA)**

(74) Representative: **Murgitroyd & Company
165-169 Scotland Street
Glasgow G5 8PL (GB)**

(56) References cited:
**US-B1- 10 812 600**

• **ZANNI ALESSANDRO ET AL: "Elastic Provisioning of Internet of Things Services Using Fog Computing: An Experience Report", 2018 6TH IEEE INTERNATIONAL CONFERENCE ON MOBILE CLOUD COMPUTING, SERVICES, AND ENGINEERING (MOBILECLOUD), IEEE, 26 March 2018 (2018-03-26), pages 17 - 22, XP033337362, DOI: 10.1109/ MOBILECLOUD.2018.00011**
• **HMISSI FATMA ET AL: "TD-MQTT: Transparent Distributed MQTT Brokers for Horizontal IoT Applications", 2022 IEEE 9TH INTERNATIONAL CONFERENCE ON SCIENCES OF ELECTRONICS, TECHNOLOGIES OF INFORMATION AND TELECOMMUNICATIONS (SETIT), IEEE, 28 May 2022 (2022-05-28), pages 479 - 486, XP034184501, DOI: 10.1109/ SETIT54465.2022.9875881**

## Description

### TECHNICAL FIELD

The present disclosure relates generally to methods for availability of an edge computing application based on local and global message queueing telemetry transport (MQTT) brokers and a multicast domain name service (mDNS).

### BACKGROUND

An edge computing implementation can be deployed based on three layers: a cloud layer, a fog/edge computing layer, and a device or Internet of Things (IoT) layer. Such a deployment can support massive IoT interconnects with large number of heterogeneous devices and services over the internet or a wireless network for various numbers of applications. Heterogeneous communication links can be wired, cellular, wireless, and/or Ad-Hoc at each level of a layer.

Connectivity can be an important requirement for such an architecture where a small code footprint may be needed and/or network bandwidth may be at a premium. Communication between participant systems and trans-layer interactions may need to provide enough scalability, interoperability, security, and stability. See e.g., Ramao Tiago et al, "Security Challenges in 5G-Based IoT Middleware Systems", Internet of Things (IoT) in 5G Mobile Technologies, pp. 399-418, 2016. Connecting IoT devices to various devices with reliable, real-time IoT data movement, processing, and integration may be highly desirable. Thus, there may be a need for accelerating IoT application development without a burden of managing infrastructure for high availability.

With the advent of the fifth generation (5G) era, massive device access and device management have brought great and extensive challenges to network bandwidth, communication protocol, and platform service architecture. Several issues of IoT device communication may need to be addressed, as the network environment may be complex and unreliable, memory capacity may be restricted, and processing capacity may be limited. See e.g., Leonardo Albernaz et al, "Middleware Technology for IoT systems: Challenges and Perspectives Toward 5G", Internet of Things (IoT) in 5G Mobile Technologies, pp. 333-367, 2016.

Also document: ZANNI ALESSANDRO ET AL: "Elastic Provisioning of Internet of Things Services Using Fog Computing: An Experience Report",2018 6TH IEEE INTERNATIONAL CONFERENCE ON MOBILE CLOUD COMPUTING, SERVICES, AND ENGINEERING (MOBILECLOUD), IEEE, 26 March 2018 (2018-03-26), pages 17-22 discusses similar topics.

Real-time applications may need real-time data transmission. In some situations, real-time applications may be affected by localized network disruptions. As a design principle, data telemetry, and communication protocols may need to be simple to implement, lightweight with bandwidth saving, data-independent, and may need to have continuous session-awareness.

Protocols may need to be decoupled from a traditional Client/Server mode and it may be desirable to adopt a concept of publish-subscribe mode. A publish-subscribe paradigm refers to an event-based architecture in which publishers publish structured events to an event service (also referred to as a "broker") and subscribers show their interest in a particular event through subscriptions.

Generally, different applications may need different types of IoT application layer protocols, based on several requirements. See e.g., Koustabh Dolui and Soumya Kanti Datta, "Comparing of Edge Computing Implementation: Fog Computing, Cloudlet and Mobile Edge Computing", IEEE Global Internet of Things Summit 2017. For example, some protocols may be specifically designed to satisfy a requirement for fast and reliable business transactions, and some may be optimized to meet a requirement of data collection (e.g., sensor updates in constrained networks). Some protocols may be suitable for applications where instant messaging and online presence detection is needed. Each of these example protocols may have their own advantages and disadvantages in different IoT scenarios, particularly, when a local connection drops and a fallback mechanism may be needed to avoid application failure.

### SUMMARY

There currently exist certain challenges. Use of wireless communications is increasing so users may have internet access no matter their location. However, wireless networks may have varying latency due to occasional bandwidth fluctuation, mobility, unreliable connection, and loss of connection. Provision of reliable connectivity in wireless networks, such as wireless local area networks (LANs) or Ad-hoc networks, for edge computing applications may be lacking, particularly when a client computing device is moving. For example, infrastructure modes of wireless networks may follow a client-server approach where a fixed server assigns an Internet protocol (IP) address. From a mobility point of view, however, such an approach may include connectivity failure when a client computing device moves.

Certain aspects of the disclosure and their embodiments may provide solutions to these or other challenges.

Operations performed by a moving client computing device (e.g., an IoT device) are included for locating an edge computing application deployed at an edge of a network or at a central cloud to switch to in the event that a first connection between the client computing device and a cloud computing device disconnects. Operations of the client computing device include using a global MQTT broker to access the edge computing application deployed in a central cloud platform; and using a local MQTT broker to access the edge computing application deployed at an edge of a network (e.g., an operator network).

Switching from a global MQTT broker to a local MQTT broker (or vice versa) may be performed using a combination of MQTT and mDNS without service interruption. Additionally or alternatively, switching from one edge device to another also may be performed using a combination of MQTT and mDNS without service interruption.

Operations can include a trigger for the switching based on a prediction from a machine learning (ML) model of the quality of the first connection (e.g., a probability of losing the first connection or a deterioration of the first connection); and/or a network or platform failure (e.g., a power supply outage due to an unexpected incident or event).

Operations can further include switching back to the cloud computing device as the connection becomes reliable, including as the client computing device is moving from one location to another location. Integration of MQTT and mDNS can be achieved by a smart messaging filtering procedure.

Operations performed by a cloud computing device (e.g., a server located at the edge network or the central cloud) include configuration and modeling, such as selection of a list of local computing devices based on a position/location, speed, and/or moving direction of the client computing device. Operations for selection of the list of local computing devices for the given client computing device is based on the position/location, speed, and/or moving direction of the corresponding client computing device. The list is received by the client computing device. Operations further include using an identification (e.g., a name) from the list to retrieve the access point of the local computing device through mDNS.

In some embodiments, a computer-implemented method is performed by a client computing device for locating an access point to an edge computing application deployed at a local network or at a central cloud to switch to in the event that a first connection between the client computing device and a cloud computing device disconnects. The method includes determining with a first machine learning (ML) model that a first connection between the cloud computing device and the client computing device will disconnect. The cloud computing device includes a first broker handling MQTT operations. The method further includes receiving an identification of a plurality of local computing devices through a mDNS; and determining, with a second ML model, an identity of a local computing device from the plurality of local computing devices for the client computing device to switch to responsive to the cloud computing device disconnection. The identified local computing device is the access point and includes a second broker to handle the MQTT operations when the cloud computing device disconnects. The method further includes switching to a second connection with the identified local computing device responsive to a disconnection of the first connection.

In some embodiments, a client computing device is provided. The client computing device includes processing circuitry; and memory coupled with the processing circuitry. The memory includes instructions that when executed by the processing circuitry causes the computing device to perform operations. The operations include to determine with a first ML model that a first connection between the cloud computing device and the client computing device will disconnect. The cloud computing device includes a first broker handling MQTT operations. The operations further include to receive an identification of a plurality of local computing devices through a mDNS; and to determine, with a second ML model, an identity of a local computing device from the plurality of local computing devices for the client computing device to switch to responsive to the cloud computing device disconnection. The identified local computing device is an access point for an edge computing application and includes a second broker to handle the MQTT operations when the cloud computing device disconnects. The operations further include to switch to a second connection with the identified local computing device responsive to a disconnection of the first connection.

In some embodiments, a client computing device is adapted to perform operations. The operations include to determine with a first ML model that a first connection between the cloud computing device and the client computing device will disconnect. The cloud computing device includes a first broker handling MQTT operations. The operations further include to receive an identification of a plurality of local computing devices through a mDNS; and to determine, with a second ML model, an identity of a local computing device from the plurality of local computing devices for the client computing device to switch to responsive to the cloud computing device disconnection. The identified local computing device is an access point for an edge computing application and includes a second broker to handle the MQTT operations when the cloud computing device disconnects. The operations further include to switch to a second connection with the identified local computing device responsive to a disconnection of the first connection.

In some embodiments, a computer program that includes program code to be executed by a processing circuitry of a client computing device is provided. Execution of the program code causes the client computing device to perform operations. The operations include to determine with a first ML model that a first connection between the cloud computing device and the client computing device will disconnect. The cloud computing device includes a first broker handling MQTT operations. The operations further include to receive an identification of a plurality of local computing devices through a mDNS; and to determine, with a second ML model, an identity of a local computing device from the plurality of local computing devices for the client computing device to switch to responsive to the cloud computing device disconnection.

The identified local computing device is an access point for an edge computing application and includes a second broker to handle the MQTT operations when the cloud computing device disconnects. The operations further include to switch to a second connection with the identified local computing device responsive to a disconnection of the first connection.

In some embodiments, a computer program product including a non-transitory storage medium including program code to be executed by processing circuitry of a client computing device is provided. Execution of the program code causes the client computing device to perform operations. The operations include to determine with a first ML model that a first connection between the cloud computing device and the client computing device will disconnect. The cloud computing device includes a first broker handling MQTT operations. The operations further include to receive an identification of a plurality of local computing devices through a mDNS; and to determine, with a second ML model, an identity of a local computing device from the plurality of local computing devices for the client computing device to switch to responsive to the cloud computing device disconnection. The identified local computing device is an access point for an edge computing application and includes a second broker to handle the MQTT operations when the cloud computing device disconnects. The operations further include to switch to a second connection with the identified local computing device responsive to a disconnection of the first connection.

## BRIEF DESCRIPTION OF DRAWINGS

The accompanying drawings, which are included to provide a further understanding of the disclosure and are incorporated in and constitute a part of this application, illustrate certain non-limiting embodiments of inventive concepts. In the drawings:

Figure 1 is a schematic illustration of a wide area application in a smart city scenario according to some embodiments of the present disclosure;
Figure 2A is a schematic diagram illustrating a multi-level hierarchical device model for an edge computing application according to some embodiments of the present disclosure;
Figure 2B is a schematic diagram illustrating a connection topology in according to some embodiments of the present disclosure;
Figure 3 is a schematic diagram illustrating an example of mDNS discovery;
Figure 4 is a schematic diagram illustrating an example of MQTT;
Figure 5 is a flowchart of operations of an IoT device in accordance with an example embodiment of the present disclosure;
Figure 6 is a flowchart of operations of a client computing device in accordance with some embodiments of the present disclosure;
Figure 7 is a schematic diagram illustrating an example embodiment of disconnection and reconnection according to some embodiments of the present disclosure;
Figure 8 is a flowchart illustrating an example embodiment of a client computing device switching from a primary Fog device connection and updating a pager URL according to some embodiments of the present disclosure;
Figure 9 is a flowchart illustrating an example embodiment of a connection fallback process in accordance with some embodiments of the present disclosure;
Figure 10 is a block diagram illustrating an architecture of a J side in JAMScript in accordance with some embodiments of the present disclosure;
Figure 11 is a block diagram of an architecture referred to herein as "JDiscovery" in a JAMScript framework of implementations of example embodiments of the present disclosure;
Figure 12 is schematic diagram illustrating an example embodiment of runtime execution of a discovery library for how JDiscovery exposed an attribute in example implementations in accordance with the present disclosure;
Figure 13 illustrates three specific examples of a computing device that may be used to implement particular embodiments of the present disclosure; and
Figure 14 is a block diagram of a client computing device in accordance with some embodiments.

## DETAILED DESCRIPTION

Inventive concepts will now be described more fully hereinafter with reference to the accompanying drawings, in which examples of embodiments of inventive concepts are shown. Inventive concepts may, however, be embodied in many different forms and should not be construed as limited to the embodiments set forth herein. Rather, these embodiments are provided so that this disclosure will be thorough and complete, and will fully convey the scope of present inventive concepts to those skilled in the art. It should also be noted that these embodiments are not mutually exclusive. Components from one embodiment may be tacitly assumed to be present/used in another embodiment.

The following description presents various embodiments of the disclosed subject matter. These embodiments are presented as teaching examples and are not to be construed as limiting the scope of the disclosed subject matter. For example, certain details of the described embodiments may be modified, omitted, or expanded upon without departing from the scope of the described subject matter.

As used herein, the term "computing device" refers to equipment capable, configured, arranged, and/or operable to perform operations disclosed herein for availability of an edge computing application during any one of a disconnection of a cloud computing device, a switching to a connection with a local computing device, and a switching to a connection with the cloud computing device when the cloud computing device connection resumes. As discussed further herein, examples of client computing devices include, without limitation, an IoT device, a smart phone, mobile phone, cell phone, voice over IP (VoIP) phone, wireless local loop phone, personal digital assistant (PDA), wireless cameras, gaming console or device, music storage device, playback appliance, wearable terminal device, wireless endpoint, mobile station, tablet, laptop, laptop-embedded equipment (LEE), laptop-mounted equipment (LME), smart device, wireless customer-premise equipment (CPE), vehicle-mounted or vehicle embedded/integrated wireless device, etc. Other examples include any UE identified by the 3rd Generation Partnership Project (3GPP), including a narrow band internet of things (NB-IoT) UE, a machine type communication (MTC) UE, and/or an enhanced MTC (eMTC). As discussed further herein, functions implemented by some embodiments may be virtualized. In the present context, virtualizing means creating virtual versions of apparatuses or devices which may include virtualizing hardware platforms, storage devices and networking resources. As used herein, virtualization can be applied to any client computing device described herein, or components thereof, and relates to an implementation in which at least a portion of the functionality is implemented as one or more virtual components. Some or all of the functions described herein may be implemented as virtual components executed by one or more virtual machines (VMs) implemented in one or more virtual environments hosted by one or more of hardware nodes, such as a hardware computing device that operates as a client computing device.

Examples of a cloud computing device include a server, a centralized device in the cloud, a decentralized device in the cloud, etc. Examples of a local computing device include a fog device, an edge device, a standalone device, a border device, an edge device, etc. As discussed further herein, functions implemented by some embodiments may be virtualized. In the present context, virtualizing means creating virtual versions of apparatuses or devices which may include virtualizing hardware platforms, storage devices and networking resources. As used herein, virtualization can be applied to any cloud or local computing device described herein, or components thereof, and relates to an implementation in which at least a portion of the functionality is implemented as one or more virtual components. Some or all of the functions described herein may be implemented as virtual components executed by one or more virtual machines (VMs) implemented in one or more virtual environments hosted by one or more of hardware nodes, such as a hardware computing device that operates as a cloud or local computing device.

When the computing device includes a logical entity, part of the computing device may be cloud-based. For example, performing an operation of the method may be seen at the same logical device, but with different physical devices, etc.

The term "edge computing application" herein is used in a non-limiting manner and can refer to any type of application that operates with devices (e.g., client computing devices) for use in a communication network that includes local devices and cloud-based devices (e.g., for autonomous driving).

Orchestration of connectivity of IoT devices, fog devices, and cloud devices may be problematic when Ad-Hoc nodes are part of a decentralized infrastructure in which applications, data, compute, and/or storage are located somewhere between a data source and the cloud. Fog devices include devices that are at or near the edges of a network, and as used herein include edge devices. Depending on client computing device mobility, two operations may be needed. First each device or participant may need to be discovered/identified through a service discovery mechanism or protocol. Then upon successful trust, the participants may have to exchange data using a telemetry transport protocol. This network orchestration may be achieved based on two protocols: Domain Name System - Service Discovery (DNS-SD) using mDNS or MQTT protocols. See e.g., Multicast DNS: Enscript Output (rfc-editor.org); MQTT Official Site, MQTT - The Standard for IoT Messaging.

Domain Name System - Service Discovery can use mDNS, which includes sending DNS packets over a user datagram protocol (UDP) to a certain multi-cast address. mDNS-capable hosts and/or participants in the network also listen to this address. Two steps may be included in this Service Discovery. First, finding the name of hosts providing a certain service (e.g., collect the mDNS name, ending with .local. IP address which can change but the name does not change). Second, resolving the .local name of a host over mDNS. A request may be sent via multicast (e.g., who is foo.local) and that packet can be seen and respond to via broadcast with its IP address, port number, and other information.

MQTT may be referred to as a lightweight broker-based publish-subscribe messaging protocol, developed, and designed for constrained devices and low bandwidth. See e.g., MQTT Official Site, MQTT - The Standard for IoT Messaging. This protocol may be suitable for networks with low bandwidth and less reliability. The protocol can be embedded in an IoT device with limited processor and memory resources. MQTT can support numerous authentications and data security mechanisms such as TLS encryption, for example. MQTT can provide one-to-many message distribution and decoupling of applications. It can be agnostic to the content of the payload. It may be built over transmission control protocol/internet protocol (TCP/IP) for basic network connectivity and can provide three different types of Quality-of-Services (QoS):

1. At most once: messages are delivered according to the best effort of TCP/IP networks. Message loss and duplication can occur.
2. A Least once: messages are assured to arrive, but duplication may occur.
3. Exactly one: messages are assured to arrive exactly once.

MQTT can have a small transport overhead and a mechanism to notify of abnormal disconnection of a client using a Last Will and Testament feature. The publishers and subscribers of messages do not speak to each other directly but through an intermediary referred to as a broker. An advantage can include that the broker can be deployed locally if only local communication is needed, or on the internet if the publisher and subscriber are not in the same local network.

As previously discussed, the use of wireless communications is increasing so users may get easy internet access no matter their location. However, wireless networks may be known to have varying latency due to occasional bandwidth fluctuation, mobility, unreliable connection, loss of connection, etc. An infrastructure mode of wireless networks may follow a client-server approach where a fixed server assigns an IP address. From a mobility point of view, however, such an approach may not be ideal, and link state information can change whenever a user(s) device moves.

Providing reliable connectivity may be a challenge when considering LANs or Ad-hoc Networks. An application layer may appear as an interface between the user and the IoT device. A particular deployment may need a specific application-layer data communication protocol and an IoT centric communication stack.

For example, in an edge computing scenario with an IoT based system, clusters of moving worker devices (e.g., IoT devices) can be connected to fog devices via a wireless network such as 5G where the connection can be wired or wireless. The fog devices can be connected to the cloud with reliable backhaul connectivity (e.g., wired or cellular connection (e.g., 5G transport)). IoT based systems generally may be deployed using either mDNS or MQTT protocols for zero configuration networking such that network participants may access the network without difficulty. Thus, mDNS and MQTT do not need a server for managing IP addresses. Such a deployment may allow scalability of the network and may be suitable for a large scale and heterogeneous IoT system. Presently, fog/edge computing ecosystems can allow services to be composed from dynamically discovered devices and services.

Using mDNS alone, however, may lead to one or more drawbacks. While a multicast procedure by itself may be straightforward, as the number of participants in the network increases, more computation may be needed. Monitoring the status of each device may be inefficient and may slow down the system. Host name allocation may be another challenge where, e.g., two hosts of the same network can land with same name (.local). Presently, mDNS is an open protocol and may be likely to respond to requests provided from other networks, which may result in security issues. mDNS may not be suitable for intense data streaming (e.g., an autonomous driving scenario) where a large amount of data may be shared between connected vehicle and a fog device.

MQTT may serve as a tool to connect many types of IoT devices of various magnitudes, but MQTT alone may not be suitable in some circumstances. For example, MQTT may have slow transmission cycles whereas fast cycles may be critical for a system with a large number of IoT devices. MQTT can operate on a flexible topic subscription system, which may cause resource discovery issues. Security may be an issue as MQTT uses transport layer security, and it can be primarily unencrypted. Creating a globally scalable network may be more difficult with an MQTT protocol due to security and interoperability challenges, for example.

Similar to a mission critical system, an IoT-based system may become unreliable or unavailable when the system either fails to respond to a request or provides an unexpected, incorrect service. See e.g., Avizienis A et al, "Basic concepts and taxonomy of dependable and secure computing", IEEE Transaction on Dependable and Secure Computing, 2004. Faults may be categorized as development faults, infrastructure faults, and interaction faults. Development faults may be characterized by incorrect implementation of software, whereas infrastructure faults may be caused by unanticipated faults in hardware. Interaction faults may occur due to interaction with other software modules or an incorrect data format. See e.g., Rajkumar Buyya and Amir Vahid Dastjerdi, "Internet of things, Principles and Paradigms", Elsevier 2016.

Network-enabled devices, such as fog and cloud devices, may include deployed software that may need to handle massive data volumes on a server side (e.g., cloud or fog devices) while maintaining low latency on the device side. There may be challenges associated with such mobile edge computing applications when high availability may be recommended. The phrase "high availability" herein is used in a non-limiting manner and, as explained herein, can refer to uninterrupted or continuous performance (in other words, not interrupted by a disconnection) for an acceptable time period (e.g., for a time period long enough to operate an autonomous vehicle during a trip).

Further, the following challenges may need to be addressed to help to provide reliable and secure application deployment:

1. Mobility of IoT devices may be a concern as mobility may lead to frequent network changes, and potential disconnection to the system due to poor and variable coverage. For example, particularly when an IoT device (e.g., a connected car) travels from a region with medium or low coverage to a region with limited coverage and/or vice-versa.
2. A global MQTT broker may be a key component of the framework and may not be available or may not be reachable, which may result in bringing down the whole framework. Two factors that can cause such an event can include: Malfunction of the global MQTT broker due to an unexpected accident or a network link (e.g., global connectivity) drop.
3. Identification of optimal coverage location to control high availability of an application operation. 5G signal coverage may be more limited than fourth generation (4G) coverage due to a high cost of evolution and an increased reflection of mm waves from building materials, for example. A moving IoT device may need to know in advance a list of available and reliable (e.g., connected) fog devices based on prediction features or intelligence.
4. A reliable discovery and identification operation may be a concern in applications where large scale IoT devices are deployed, with stationary and mobile fog devices. mDNS may be used in conjunction with DNS service discovery, which may help announce and discover lists of available services via DNS. This mDNS feature may be correct with resource-rich devices, but may lead to distributed denial of service (DDOS) amplification attacks since it uses UDP, which may be spoofable.
5. Discovery and disseminating information and querying it to find interesting events may be subject to at least two contexts: (a) It may be suitable and beneficial for the system to disseminate only key events as a physical process happens in the real world. (b) Disseminating all events in continuous data feeds may include too much information inside the network.
6. IoT device interoperability may be affected by IoT devices from a different branch and/or a different provider, as software may not effectively and fluently communicate with each other. Thus, it can be important to provide operations that can enable interoperability.

An inability to articulate and address at least the challenges discussed above may lead to product or application failure. For example, in Jorge E. Lizuriaga et al, "Handling Mobility in IoT Applications using the MQTT Protocol", 2015 Internet Technologies and Application (ITA), 2015, an approach is discussed for handling mobility issues in an IoT application using a MQTT protocol. When disconnection between a publisher and broker occurs, the nodes enter into a "roam mode". The approach includes an additive buffer to an internal MQTT broker buffer to store published message that have not received acknowledgement. When re-established, the messages are delivered. Such an approach may create a break in the edge application and may not be suitable for critical IoT applications. The approach also may not address availability needs (e.g., high availability) in applications such as autonomous driving.

In Asad Javed et al, "Edge Computing-based Fault-Tolerant Framework: A case Study on Vehicular Networks", IEEE International Wireless Communications and Mobile Computing, 2020, another approach is discussed for a distributed fault-tolerant framework for vehicle-to-infrastructure (V2I)/infrastructure-to-infrastructure (I2I) communication based on edge computing. The approach discusses hardware and network connectivity-based failures. Cloud technologies deployed for edge computing may be based on four layers: Devices/Communication/Management/Application. The approach, however, may not handle real-time applications where task completion time may be restricted (e.g., highly restricted). The discussed approach is based on an open-message interface (O-MI)/O-open data format (DF) protocol, which may have a lower overall traffic load setting (e.g., much lower), as compared to MQTT. See e.g., Paul-Lou Benedick et al, "O-MI/O-DF vs MQTT: A performance analysis", Industrial Cyber-Physical Systems, IEEE, 2018.

In Deepa Rajendra et al, "Enabling High Availability Edge Computing Platform", IEEE international Conference on Mobile Cloud Computing, Services, and Engineering, 2019, an approach is discussed based on an edge computing solution for developers to remotely orchestrate edge devices without caring about their physical location or their network configuration. In a real-time application, fully connected nodes may be required to allow fast messaging and data transfer. The approach discussed a virtualized space instead of a virtual machine. The virtualized space may be used to deploy applications, debug, analyze their performance, and retrieve the results of the remote applications. The approach may address challenges related to memory constraints, but status of the devices is available via a dashboard remotely. Such an approach may not allow deployment of real-time applications where local processing and inference may be desirable (e.g., highly desirable).

In Jitender Grover and Rama Murthy Garimella, "Reliable and Fault-Tolerant IoT-Edge Architecture", IEEE Sensors, 2018, a Mobile Agent (MA) in an edge computing environment is discussed that may share system state and other important information with other agents in a hierarchy. The discussion may include an approach for possible faults at different levels of a cloud-hierarchy. However, no application protocol or messaging protocol is included to reliably handle data transfer. The approach also includes data replication and redundancy as part of the architecture, which may lead to system overload. Additionally, activity transfer and migration may be applied when any sudden fault occurs. The approach may cause an application to fail if reliable surrounding devices are not properly identified.

In Lujie Tang et al, "Reliable Mobile Edge Service Offloading Based on P2P Distributed Networks", Symmetry Journal, Vol 12, pages 821, 2020, and in the context of V2V and in mobile edge computing, another approach is discussed that includes two algorithms in tandem that may address data and task offloading. While the approach may help to improve reliability and fault tolerance of the system, in a mobile edge computing scenario there may be a need for a reliable connectivity link between devices. The approach lacks an ability to handle link drop of device disconnection that can affect a mobile edge computing application.

Fast and reliable communication, data transaction, and online presence may be essential when deploying an edge computing application framework. For example, for autonomous vehicle orchestration, latency may be critical and failures may lead to fatal behaviors. Developing software across devices, e.g., between fog and cloud devices, may be challenging. Either mDNS or MQTT, when implemented alone as a communication protocol, may have drawbacks as discussed herein. Accordingly, it may be desirable for a deployed architecture to support both an mDNS and MQTT discovery service and application protocol so that a system may work in heterogeneous communication coverage (e.g., LAN, WAN).

Certain aspects of the disclosure and their embodiments may provide solutions to these or other challenges. In some embodiments, operations are provided that may provide high availability of an edge computing application. The operations combine mDNS and MQTT capabilities as a hybrid discovery and data communication service (e.g., referred to, and discussed further herein, as JDiscovery in example embodiments of implementations). Some embodiments include a two layer MQTT broker architecture, which may prevent issues resulting from mobility and network heterogeneity, latency, network congestion, connection drop between cloud and fog devices, accidental failure of a global MQTT broker, etc. In an example embodiment, the two layer MQTT broker architecture includes (1) a global MQTT broker deployed in a central cloud environment; and (2) a local MQTT broker (also referred to herein as a "pager"), that can be deployed at different locations (e.g., in fog devices).

In an example embodiment, messages that contain a list of local MQTT brokers are populated by a global MQTT to an IoT device from time-to-time, upon request. The list of local MQTT brokers can be based on a moving IoT device location, an IoT device velocity, and/or a moving direction of the IoT device. As a consequence, diversification of local MQTT brokers and high availability of an edge computing application may be provided. Various embodiments include two machine learning (ML) models for two tasks: (1) To determine (e.g., predict) whether global connectivity between a fog device and a cloud device is going to drop or not; and (2) to determine (e.g., predict) the closest local MQTT broker/pager to switch to in case of a fog to cloud disconnection.

Based on deployment of mDNS and MQTT together, a request selection process is included in some embodiments to avoid duplicated or superposed messages. Additionally, based on the inclusion in some embodiments of operations to address communication links between a fog device and a central cloud device that drop, or when the protocol itself fails, the operations of some embodiments may handle challenges associated with data communication protocols of other approaches.

Technical advantages provided by certain embodiments of the present disclosure may include that, e.g., based on inclusion of mDNS and MQTT communication protocols, various challenges of other approaches in edge computing applications may be addressed including:

Exploitation of joint MQTT and mDNS capability: Strengths of MQTT and mDNS are combined together, which may result in a robust service discovery protocol and communication protocol for edge computing applications.

Messaging Control Ability and Smart Discovery: Discovery may expect to receive duplicate messages from MQTT and mDNS. Thus, some embodiments include operations to control messaging via a filtering or selection scheme based on a high-resolution timestamp. As a consequence, a reduction of the volume of information injected into the network and resulting processing overhead may be enabled. Furthermore, flexibility of pushing any information may be provided. Additionally, inclusion of restricted dissemination scope to avoid flooding the network and burdening all devices may be accomplished.

mDNSRegistry stability: mDNS may be based on the Apple Bonjour library and, thus, may have attributes that are not consistently discovered through a mDNSRegistry. Based on the Inclusion of a MQTT and mDNS, a balance between the mDNSRegistry and the MQTT Registry may be found.

Network disconnection and global broker crash management: A cloud device may not monitor a status of the global MQTT broker and send contextual information to fog devices in the case of a disconnection or an offline event. Based on inclusion in some embodiments of a capability to adapt to connection issues and broker crashes, management of disconnection may be accomplished. For example, based on the inclusion of an automatic fallback routine for MQTT client devices to perform reconnection and re-subscription; and/or a ML model to proactively predict if the connection between a cloud device and a fog device will drop based on a reference connection status.

High Availability of an edge computing application: Based on inclusion of operations for an IoT device to automatically switch to a local MQTT broker when a fog device is disconnected from a cloud device, an edge computing application may be highly available. Additionally, in some embodiments, as a consequence of re-connection to a cloud device being automatically resumed when the connection becomes available, availability of an edge computing application may be ensured. With an IoT device on the move, the IOT device can, from time-to-time, request a list of available, proximate local MQTT brokers based on mobility parameters (e.g., speed, direction, and/or position) of the IoT device.

The IoT device, thus, can have a plurality of local MQTT broker choices and a ML model to find the closest fog device that includes a local MQTT broker, which may further provide high availability of an edge computing application.

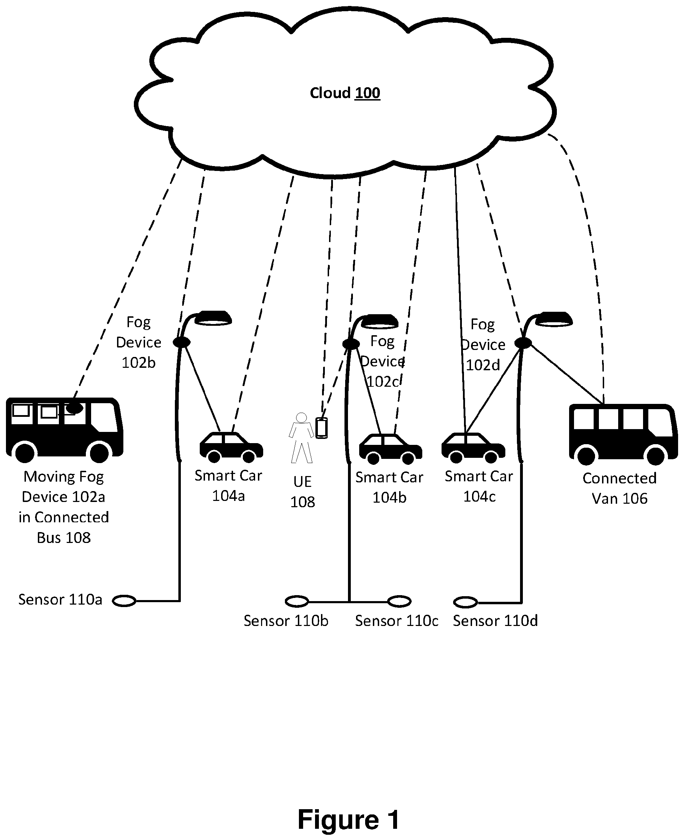

Figure 1 is a schematic illustration of a wide area application in a smart city scenario according to some embodiments of the present disclosure. As shown in Figure 1, autonomous (e.g., smart) cars 104a, 104b, 104c, a moving fog device 102a in a connected bus 108, a connected van 106, and a pedestrian with a user equipment (UE) 108 are moving in the city based on a wide area application(s) that run on fog devices 102a, 102b, 102c, 102d, etc. (e.g., fog servers) installed throughout the smart city. For example, a wide area application uses smart city infrastructure (e.g., sensors 110a, 110b, 110c, 110d in the road connected to the fog devices 102b, 102c, 102d on the lampposts), and the cloud 100 to get auto drive guidance for the autonomous cars 104a, 104b, 104c.

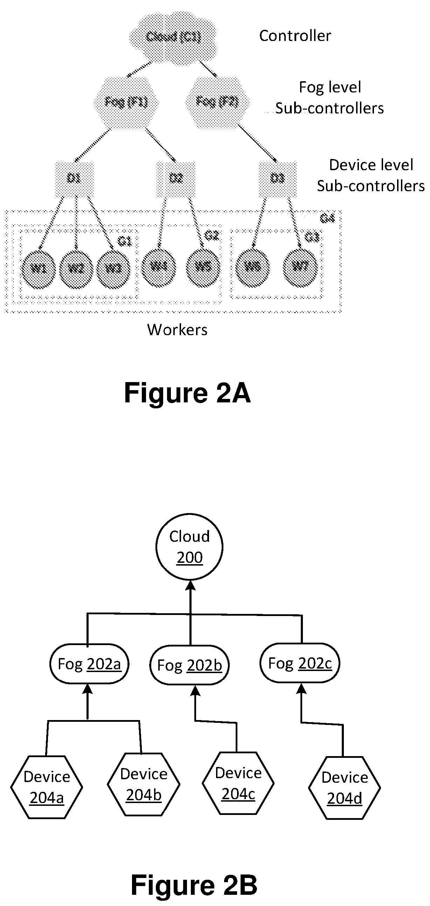

Edge computing applications can include remote and local function calls, in a multi-level hierarchical device model showing controllers at different levels: Cloud controller C1, fog level controllers F1 and F2, and device level sub-controllers D1, D2, D3, as illustrated in Figure 2A. Device level sub-controllers D1, D2, D3 can discover attributes of fog level controllers F1, F2 and the cloud controller C1. Fog level sub-controllers F1, F2 can discover attributes of the cloud controller C1.

Figure 2B is a schematic diagram illustrating an example embodiment of a connection topology between a cloud computing device 200, fog computing devices 202a, 202b, 202c, and client computing devices 204a, 204b, 204c and 204d. As shown in Figure 2B, each line represents a discovery event with an arrow pointing to a discovered device. In this example embodiment, the illustrated attribute discoveries are strictly upward because downward discoveries may be un-maintainable.

In some embodiments, communication and networking are addressed by including an association of MQTT and mDNS (e.g., to replace existing MQTT (message passing, remote call) and Redis (data transfer)).

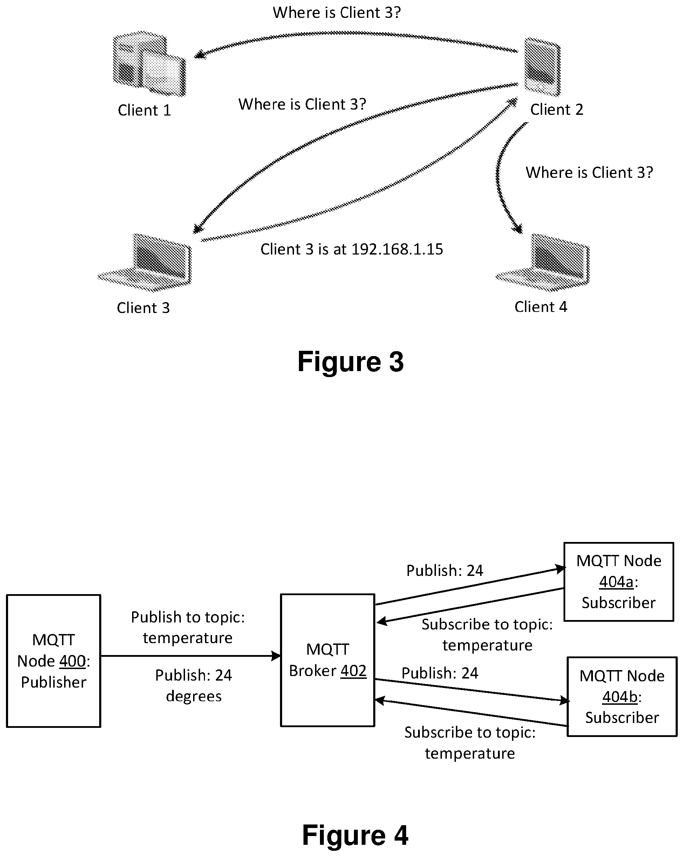

mDNS can be an alternative name resolution on a small scale. For example, mDNS takes a different approach than well-known DNS. Instead of querying a name server, participants in the network are directly addressed. The querying device sends a multicast (that is, a single message directed at a group of recipients) into the network asking which network participant matches up with the host name. By doing so, the request goes to a group of participants who own the host name that is being searched for, as illustrated in Figure 3. The latter responds to the entire network (also via multicast). All participants are informed of the connection between the host name and IP address and can make a corresponding entry in their mDNS cache. As long as this notation is valid, no participant in the network needs to request the host name.

Referring to Figure 3, Client 2 broadcasts a request message "Where is Client 3" to an entire LAN. Upon reception, Client 3 replies back to Client 2 with its host and address, e.g. "Client 3 is at 192.168.1.15" . While this discovery process may be helpful, data exchange or streaming using such an approach may overload the LAN when the number of participants increases.

Figure 4 is a schematic diagram illustrating an example of a MQTT scenario. MQTT refers to a publish/subscribe bidirectional protocol on top of TCP/IP. As illustrated in Figure 4, MQTT allows nodes 400, 404a, 404b to publish to a centralized message broker MQTT broker 402. Messages passed from the nodes 400, 404a, 404b to a server should be sent via the centralized MQTT broker 402. Any third-party node who wishes to subscribe to data published by the MQTT publisher MQTT node 400 is considered as an MQTT subscriber.

MQTT may be considered as a message queueing protocol that may be best suited for embedded hardware devices, such as IoT devices. On a software level, MQTT can support many operating systems (OS) and platforms because of its more pragmatic security and message reliability. MQTT may be data centric, whereas for example, hypertext transfer protocol (HTTP) may be document centric. HTTP is a request-response protocol for a client-server. A publish-subscribe model may provide clients with independent existence from one to another and enhance the reliability of the whole system. MQTT also may maintain a stateful session. Even if a client is out of the network, the system can keep itself up and running. MQTT may ensure a high delivery guarantee compared to HTTP, and MQTT may allow composing lengthy headers and messages.

MQTT can include three levels of quality of service (QoS): (1) QoS 0, at most once, which may guarantee that a message will be delivered with a best effort; (2) QoS 1, at least one, which may guarantee that a message will be delivered at a minimum of one time, but the message can also be delivered again; and (3) QoS 2, exactly one, which may guarantee that a message will be delivered one and only one time.

Last Will and Testament and retained messages may be options made available by MQTT to user devices. With Last Will and Testament, in case of an unexpected disconnection of a client device, subscribed client devices can get a message from the broker. Newly subscribed client devices can get immediate status updates via a retained message. HTTP protocol lacks these features and abilities. In some embodiments of the present disclosure, MQTT may allow for collection, transmission, and analysis of more of the data being collected by worker devices. MQTT may be well suited for remote sensing and control with scalability.

In some embodiments, a global MQTT broker is a primary discovery server used when there is global connectivity. If global connectivity ends (that is, disconnects), a local MQTT broker (also referred to herein as a pager) can resume the discovery operations. As a consequence, operations of the present disclosure may handle a scenario when a global MQTT broker, and a backup broker are down or are not accessible by fog devices. Moreover, operations of the present disclosure may address challenges that occur when the connection between a fog device and a cloud device is disconnected (e.g., a global network disconnection). Generally, when such an event occurs (e.g., a crash of a global broker or a network disconnection), all participant devices stop working and the edge computing application cannot be suitably used.

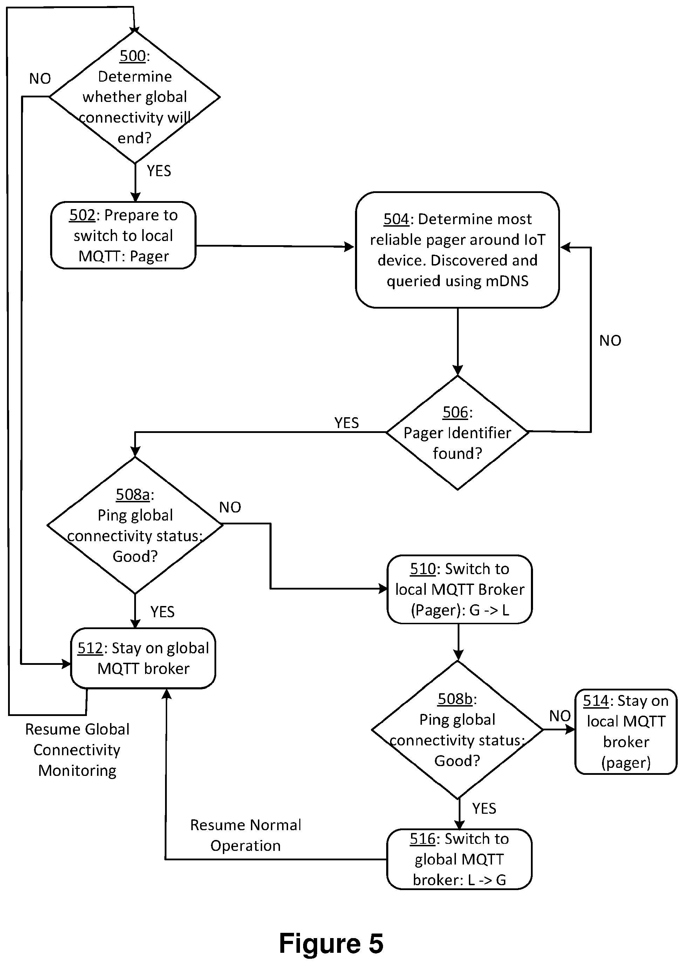

Figure 5 is a flow chart of operations of an IoT device in accordance with an example embodiment of the present disclosure. As shown in Figure 5, operations are included for a global network disconnection which may ensure high availability of an edge computing application. The operations included in Figure 5 can be deployed to handle a switch from a global MQTT broker to a local MQTT broker (e.g., a pager), and a switch from the local MQTT broker to the global MQTT broker.

Referring to Figure 5, operations 500 and 504 include two ML models deployed to, respectively, determine (e.g., predict) whether global connectivity is going to drop or end, and to determine (e.g., predict) a most reliable local MQTT device (e.g., pager) in an area proximate the IoT device. Operation 506 determines whether an identifier of the local MQTT device (e.g., pager) is found. If no, operations return to operation 504. If yes, operations proceed to operation 508a (discussed further below).

Operations 510 and 516 include switching (operation 510) the IoT device from a global MQTT broker to a local MQTT broker when a global disconnection occurs; and switching (operation 516) the IOT device from the local MQTT broker back to the global MQTT broker to resume normal operation.

Operation 508a, 508b, 512, and 514 include: monitoring (e.g., pinging or probing) 508a, 508b the global connectivity; and staying connected 512 to the global MQTT broker when the global connectivity is effective/acceptable, or staying connected 514 to the local MQTT broker when the global connectivity is down.

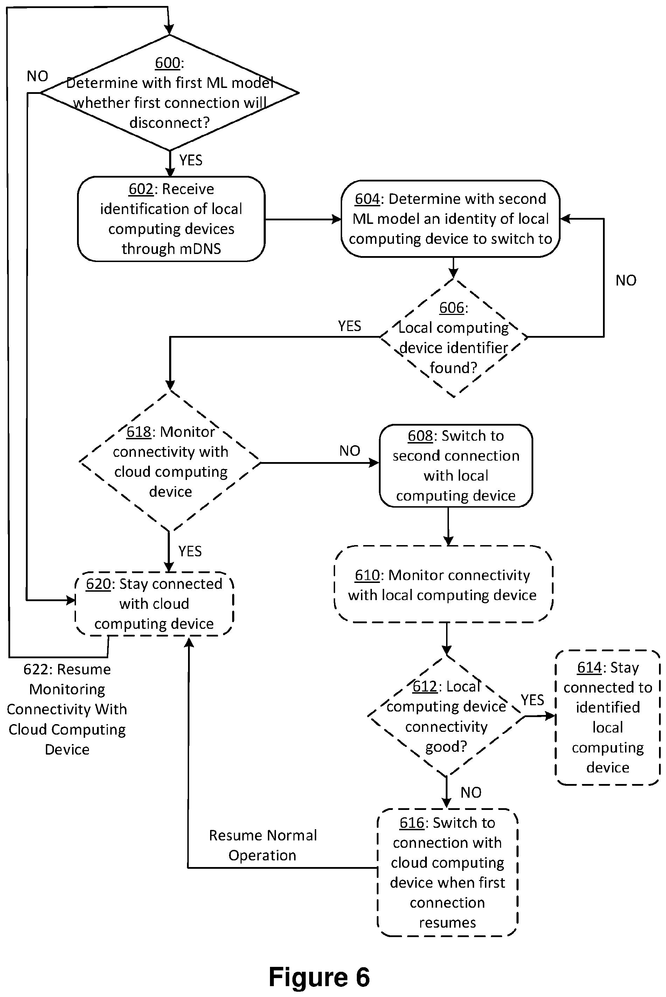

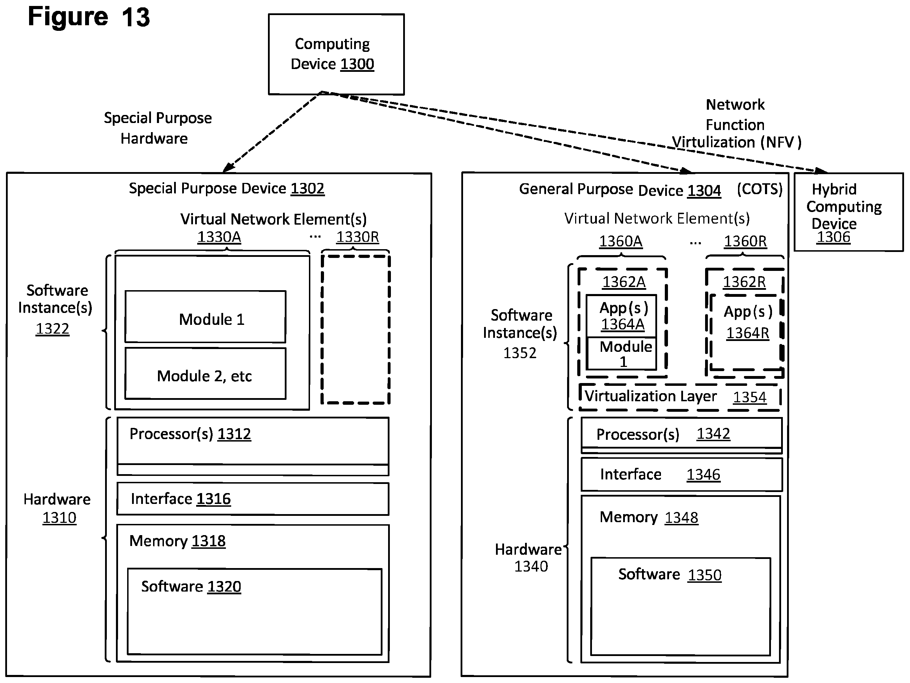

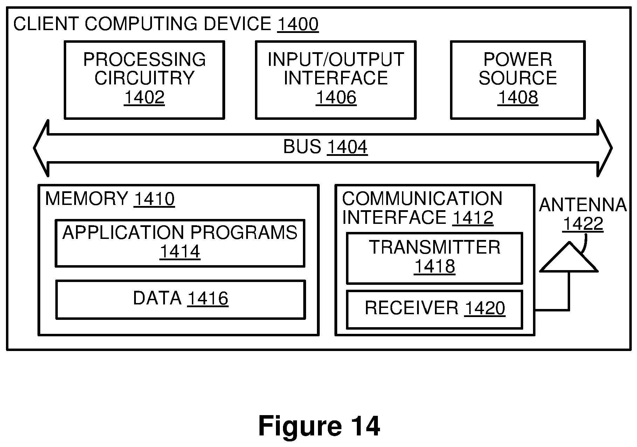

Figure 6 is a flowchart of operations of a client computing device (implemented using the structure of Figures 13, or 14). For example, modules may be stored in memory 1318, 1348, 1410 of Figures 13, or 14, respectively, and these modules may provide instructions so that when the instructions of a module are executed by respective client computing device processing circuitry 1312, 1342, or 1402, client computing device 1300 or 1400, respectively, performs respective operations of the flowchart.

A computer-implemented method performed by a client computing device is provided for locating an access point to an edge computing application deployed at a local network or at a central cloud to switch to in the event that a first connection between the client computing device and a cloud computing device disconnects. The method includes determining (600) with a first ML model that a first connection between the cloud computing device and the client computing device will disconnect. The cloud computing device includes a first broker handling MQTT operations. The method further includes receiving (602) an identification of a plurality of local computing devices through a multicast domain name service (mDNS). The method further includes determining (604), with a second ML model, an identity of a local computing device from the plurality of local computing devices for the client computing device to switch to responsive to the cloud computing device disconnection. The identified local computing device is the access point and includes a second broker to handle the MQTT operations when the cloud computing device disconnects. The method further includes switching (608) to a second connection with the identified local computing device responsive to a disconnection of the first connection.

In some embodiments, the method further includes switching (616) to a connection with cloud computing device when the first connection resumes.

The determining (600) with the first ML model may include receiving first input data including at least one or more of (i) a change in a received power level between the cloud computing device and the client computing device, (ii) location coordinates and a corresponding time for the client computing device for the expected disconnection of the first connection, (iii) location coordinates and absence of a specific network infrastructure, and (iv) information shared by other local computing devices preceding the current local computing device; and outputting from the first ML model, based on the first input data, a status or probability that the first connection of the cloud computing device will disconnect.

Some embodiments of the method further include monitoring (610) connectivity with the local computing device to determine (612) a connectivity status of the local computing device; and staying (614) connected to the identified local computing device when the connectivity status with the local computing device is acceptable. The monitoring 610 determines 612 whether the local computing device connectivity is good. If the local computing device connectivity is good, the client computing device stays 614 connected to the identified local computing device. If the local computing device connectivity is not acceptable, the client computing device switches 616 to a connection with the cloud computing device when the first connection resumes.

In some embodiments, the determining (604) with the second ML model includes receiving second input data including at least one or more of (i) an identification of respective identifiers for plurality of local computing devices, (ii) a position of the respective plurality of local computing device, and (ii) a speed, a direction, and/or a position of the client computing device; and outputting from the second ML model, based on the second input data, the identified local computing device for the client computing device to switch to based on a respective position and a reliability of an identifier for the identified local computing device. The determining 604 includes whether an identifier is found 606 for the identified local computing device.

In some embodiments, the disconnection of the first connection includes at least one of (i) a network connection between the cloud computing device and the client computing device has dropped, and (ii) the cloud computing device is not responding.

In some embodiments, the method further includes monitoring (618) connectivity with the cloud computing device to determine a connectivity status of the cloud computing device; and staying (620) connected to the cloud computing device when the connectivity status with the cloud computing device is acceptable.

Some embodiments of the method further include resume monitoring (622) connectivity with the cloud computing device to determine a connectivity status of the cloud computing device.

In some embodiments, the cloud computing device, the local computing device, and the client computing device communications, respectively, include a deduplication identifier including a timestamp at a protocol level used to deduplicate messages that did not originate from a MQTT or a mDNS protocol.

In some embodiments, the client computing device further includes an mDNS module.

In some embodiments, the client computing device includes an IoT device.

In some embodiments, the local computing device includes at least one of a fog computing device, an edge computing device, and a radio base station.

In some embodiments, the edge computing application includes an IoT application.

Various operations from the flowchart of Figure 6 may be optional with respect to some embodiments of client computing devices and related methods. For example, operations of blocks 606, 610, 612, 614, 616, 618, 620, and/or 622 may be optional.

While an approach such as that discussed in Jorge E. Lizuriaga et al, "Handling Mobility in IoT Applications using the MQTT Protocol", 2015 Internet Technologies and Application (ITA), 2015 may be deployed, the approach may not be able to handle real-time tasks, mobility, and latency critical applications such as autonomous driving, for example.

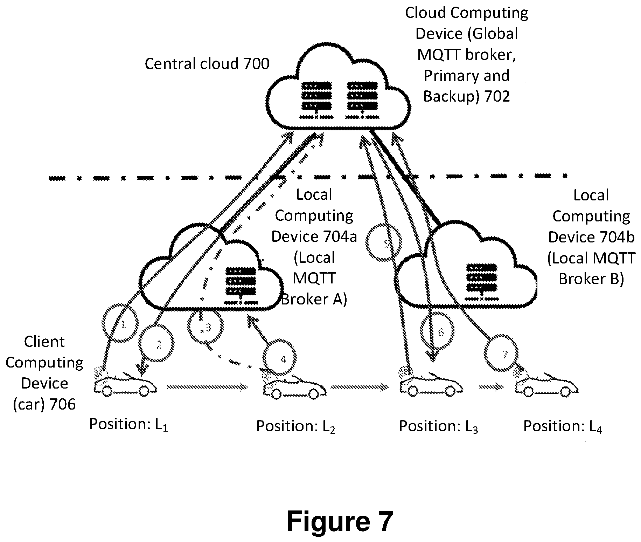

An example embodiment that includes autonomous driving is illustrated in Figure 7 where a client computing device 706 (an IoT connected car in the example of Figure 7) is moving from position $L_1$ to position $L_4$. Figure 7 illustrates a disconnection and reconnection in accordance with some embodiments. As discussed further below, in operation 3, the client computing device 706 fails to access cloud computing device 702 which includes a primary and a backup global MQTT broker. Thus, there is no communication available for message exchange between client computing device 706 and cloud computing device 702. It is noted that in other example embodiments, disconnection includes a situation where the global MQTT broker in cloud computing device 702 is down. The client computing device 706 is equipped with a first ML model used to determine/predict a closest local computing device 704 that includes a local MQTT broker. A second ML model is used to determine/predict whether global connectivity will end or not.

In the example embodiment of Figure 7, the client computing device 706 performs the following operations.

Operation 1: At $L_1$ location, the client computing device 706 sends a request to cloud computing device 702 that includes the global MQTT broker. A topic called "Pager Availability" is hosted by the global MQTT broker where cloud computing device 702 can publish upon request a list of local computing devices 704 where a local broker is located in a direction or area of the client computing device 706. In the example embodiment of Figure 7, the list of local computing devices includes two descriptions where two local MQTT brokers reside (e.g., two pagers' URLs with their associated IP addresses, host, longitude, latitude): local MQTT broker A in local computing device 704a and local MQTT broker B in local computing device 704b.

Upon starting an edge computing application, participating client computing devices are provided with a trained ML model(s) (e.g., which can be a function) which is used to try to help ensure high availability of the edge computing application.

In some embodiments, two ML models are deployed. The first ML model is used to determine/predict if the global connection will drop or will end. Input to the first ML model can include: Changes in received signal power level (e.g., a Receive Signal Strength Indicator, RSSI); The location coordinates and a corresponding time for the client computing device 706 for the expected disconnection of the connection; The location coordinates and absence of certain networks infrastructures (e.g., wireless infrastructures, coverage, etc.); Information shared by other devices (e.g., local computing devices) preceding the current local computing device 704a.

Input to the second ML model can include: A list of local computing device identifiers (e.g., URL, Host/IP, Longitude, Latitude); The speed, direction, and position (e.g., longitude and latitude) of the client computing device 706.

Still referring to Figure 7, the determination/prediction output of the second ML model is the closest, reliable local computing device identifier, (e.g., the URL, Host, and/or IP address) to which the client computing device 706 will switch in the event of a global MQTT broker crash or in case of disconnection between the current local computing device 704a and the cloud computing device 702. For example, as discussed further herein, in an example embodiment of an implementation with JAMScript, the implementation allows client computing devices to run functions that are deployed either in the cloud computing device(s) or on the local computing device(s). Such an implementation can enable a client computing device to directly call and run a function available in a local computing device(s) or in a cloud computing device(s). The second ML model may be trained offline and pushed to the client computing device 706 at the time the client computing device 706 starts the edge computing application.

The determination/prediction of the first ML model in Figure 7 is a status or probability of whether the global connectivity will end or drop. If the probability is high enough, the client computing device 706 activates a second sequence by pinging or probing the global connectivity.

Operation 2: The global broker of cloud computing device 702 provides a list of local MQTT brokers/pagers. As shown in Figure 7, this includes local MQTT broker A and local MQTT broker B, based on the position, speed, and/or direction of the car 706. The edge computing application operates in a normal condition with the client computing device 706 interacting with the global MQTT broker in cloud computing device 702 via local computing device 704a.

The first ML model is used to determine/predict that global connectivity is going to end or not (in other words, whether global MQTT broker in cloud computing device 702 will be unavailable). In the example embodiment of Figure 7, the first ML model uses the following features: Changes in a received power level RSSI between the cloud computing device 702 and local computing device 704a. This change can be applied for all local brokers in the area of the client computing device 706 (which are, local MQTT A and local MQTT B in Figure 7 ); Location coordinates and a corresponding time for the client computing device 706 for the expected disconnection; Location coordinates and absence of certain network (e.g., wireless infrastructures, coverage, etc.); and information shared by other nodes preceding current local computing device 704b.

Operation 3: On the way to location $L_2$, the client computing device 706 receives from the first ML model a determination/prediction that the global connection will drop. At Location $L_2$, the client computing device 706 tries to connect to global MQTT broker in cloud computing device 702 and fails. Failure may be due to at least one of two factors: (1) The network connection between the local computing device 704a and the cloud computing device 702 has dropped; or (2) The global MQTT broker in cloud computing device 702 is down and cannot respond.

Operation 4: The client computing device 706 was previously provided with the list of available local computing device 704a, 704b identifiers where a local broker resides. Based on the second ML model result obtained in operation 1, the client computing device 706 automatically switches the connection to the local MQTT broker A in local computing device 704a. There may be no delay or latency of the edge computing application since the URL of local MQTT broker A is available in advance. The cloud computing device 702 monitors the global MQTT broker status. The client computing device 706 moves in the direction of the local MQTT B toward position 3.

Operation 5: At position $L_3$, the client computing device 706 sends a request to the global MQTT broker in cloud computing device 702 and succeeds due to an updated or different access network. The client computing device 706 also exposes to the global MQTT broker its position, speed, and direction.

Operation 6: The global MQTT broker provides a list of local MQTT brokers (that is local computing devices available) based on the client computing device 706 position, speed, direction, as discussed in operation 2. In operation 6, the client computing device 706 can infer the second ML model and determine/predict an available, reliable local computing device in its direction.

Operation 7: At position $L_4$, the client computing device 706 sends a request to global MQTT broker in cloud computing device 702, and the edge computing application continues the global operation.

In some embodiments, local computing devices are allowed to setup a local MQTT broker/pager to resume the global MQTT broker operations upon a disconnection or failure event. Once the global MQTT broker becomes available, a local computing device(s) broadcasts a message (e.g., "switch MQTT Connection") so that a client computing device can switch to the global MQTT broker connection. Additionally, a list of subscribing MQTT topics is locally stored. Thus, for example, in an example embodiment of an implementation in JAMScript discussed further herein, a JRegistrar knows how to resume attribute discovery after an MQTT client computing device connection is changed.

A light-weight nature of MQTT may allow more than one MQTT broker in a configuration. Some embodiments include redundancy. For example, as discussed further herein regarding an example embodiment of an implementation, JDiscovery deploys a global MQTT broker and a backup broker. Local computing devices, on the other hand, have only local MQTT brokers/pagers. Client computing devices can reconnect to the backup broker when the primary MQTT broker is offline. If the global MQTT broker and backup broker are down, then client computing devices can automatically reconnect to the most reliable local computing devices (e.g., pagers), based on speed, position, direction of the client device. When up, the global MQTT broker can expose a URL of a local MQTT broker in the direction and area where the client computing device is deployed, which may result in high availability of an edge computing application. Additionally, some embodiments allow the cloud computing device to monitor the status of the global MQTT broker so that the global MQTT broker broadcasts its availability when it becomes available.

Some embodiments include a MQTT client computing device reconnection and fallback process.

In some embodiments, client computing devices receive an array that contains a list of broker URLs at startup. The array is received from an upper-level node/device through mDNS. The following example embodiment of "Connection option of a MQTT Client" code shows an MQTT connection option function in JDiscovery. The input parameter "brokerURL" contains the URL array that an MQTT client computing device iterates at every reconnect. The first URL is the primary global broker URL, the second is the backup global broker URL, the third is the local computing device (e.g., Fog-level) broker URL. The cloud computing device provides the first and second global URL, and a local computing device provides the third local computing device level (e.g., fog level) broker URL. Every time a device-level JDiscovery instance connects to a different local computing device (e.g., fog device), the local computing device broadcasts the local computing device-level broker URL through mDNS. A device level MQTT client computing device then overwrites the existing third connection URL.

Example embodiment of code excerpt: "Connection option of a MQTT Client":

```
/*
        Singleton Method
        Returns connection options to the mqtt broker contingent upon the connection
        node
        take as arguments the name of the application, the type of the machine, and the
        id of the machine
        */
        MQTTRegistry.prototype._getConnectionOptions = function(brokerURL){
            if(this.options != null){
                return this.options;
        // create the will
        var will = {
                topic: this.app + '/' + this.machType + '/' + this.id + '/status',
                payload: JSON.stringify({payload: 'offline'})
                qos: this.pubQos,
                retain: true
         }
        this.options = {
                clientId = this.id,
                keepalive: constants.mwtt.keepAlive,
                clean: false,
                connectTimeout: constants.mqtt.connectionTimeout,
                will: will,
                servers: brokerURL,
         };
        //set and return the connection options
         return this.options
        }
```

The following example embodiment of an excerpt of "Pager update function" code shows how a Pager URL is updated in a client computing device:
Pager update function:

```
        Registrar.prototype.updateLocalBroker = function(port, ip, checkingPeriod = 100){
            if(this.mqttRegistry){
                this.mqttRegistry.updateLocalBroker(this.mqttRegistry, {port: port,
        host:ip}, checking Period);
            }else throw "MQTT Registry is not used. Cannot prepare fog-level broker
        connection";
        }
        MQTTRegistry.prototype.updateLocaIBroker = function(self, url, checkingPeriod =
        100){
            if (!url.hasOwnProperty('host') □ !url.hasOwnProperty('port')){
                throw "Local Broker UEL object does not have keys \'host\' or
        \'port\'"
            }
            let updateRoutine = () => {
                if(self.connected && self.client.options.servers.length >= 2){
                    // Remove the existing local Broker. Add a new local Broker
                    self.client.options.servers.splice(2,1,url)
                }else {
                    setTimeout(updateRoutine, checkingPeriod);
                }
            }
            updateRoutine()
        }
```

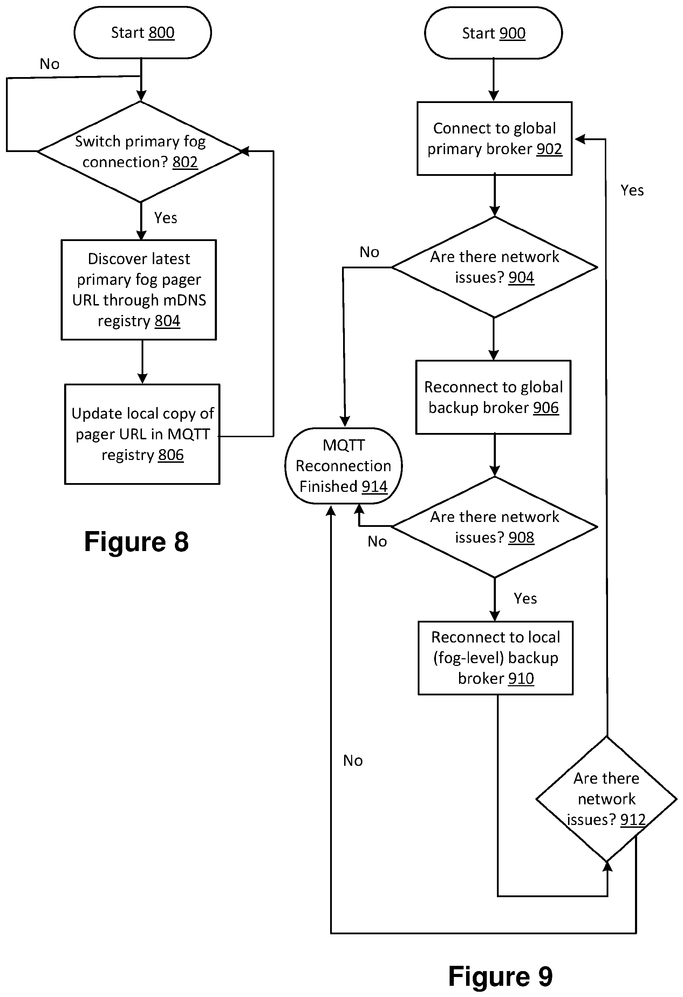

Figure 8 is a flowchart illustrating an example embodiment of a client computing device switching from a primary fog device connection and updating the pager URL. Operations start 800. In operation 802, client computing device determines whether to switch a primary fog connection. If no, the operations return to operation 802. If yes, the operations proceed to operation 804 to discover a latest primary fog pager URL through a mDNS registry. In operation 806, a local copy of the pager URL is updated in an MQTT registry. Operations continue by returning to operation 802.

When the primary global MQTT broker crashes, all three levels of cloud, fog, and client computing devices automatically fall back to a global backup broker. When the global backup broker crashes, the cloud computing device can stop functioning while the fog and client computing devices still need connection to a fog-level broker to resume operations. The cloud computing device waits for a successful reconnection to the primary or backup global MQTT broker. If the reconnection happens, the cloud computing device can advertise a message (e.g., "Global broker is up") so that fog and client computing devices can switch their connections.

Figure 9 is a flowchart illustrating an example embodiment of a connection fallback process in accordance with some embodiments. Operations start 900. In operation 902, a client computing device connects to a global primary broker. In operation 904, the client computing device determines whether there are network connectivity issues. If yes, operations proceed to operation 906 to reconnect to a global backup broker. Once connected to the global backup broker, in operation 908, the client computing device determines whether there are network connectivity issues. If yes, operations proceed to operation 910 to reconnect to a local (e.g., fog-level) backup broker. Once connected to the local backup broker, in operation 912, the client computing device determines whether there are network connectivity issues. If yes, operations return to operation 902.

If the result of any one of operations 904, 908, or 912 is that there are no network connectivity issues, the operations proceed to operation 914 to indicate that a MQTT reconnection is finished.

MQTT broker configurations can include that administrators can connect multiple brokers and share messages. This multi-broker connection scheme may be referred to as "bridging". Bridging may allow transparency of messages for two connected brokers. Messages published to a broker A are also visible to a broker B if broker A and broker B are connected. The bridging capability can be used to configure multiple global brokers on the cloud side. While bridging may reroute messages to brokers, bridging may not provide fault-tolerance or availability benefits. As a consequence, MQTT cannot migrate a session between bridges brokers.

Five implementations of example embodiments of a method were performed in accordance with some embodiments of the present disclosure. A JAMScript environment was used in each implementation.

JAMScript is a system programming language designed to enable intelligent device cooperation and ease cross-device software development using a unified programming language. JAMScript is edge oriented for mobile IoT devices and is suitable for application development. It can allow and includes a process of establishing a network connection, communication, task scheduling, task execution, and network configuration due to mobility. The JAMScript programming language can be intuitive, scalable, space-efficient, and time-efficient.

JAMScript combines C and JavaScript (JS) so that developers may easily configure each JAMScript program to run in client computing devices, local computing devices (e.g., fog devices), and cloud computing devices with distinct sets of functionalities. JAMScript can support synchronous and real-time task execution and, thus, fog devices can launch the same task across multiple client computing devices without interfering with original task schedules, for example.

Components of JAMScript runtime may include the following: (1) JAMCore: message passing; (2) Ebus: Inter-component communication; (3) JAMSys: Runtime environment; (4) JAMProtocol: Message Protocol; (5) NCoreAdmin: Network change reconfiguration; (6) JCoreDaemon: Task execution originated from remote nodes; (7) JCoreClient: Task execution launched to remote nodes; (8) RunTable, ActivityTable: Track task execution status.

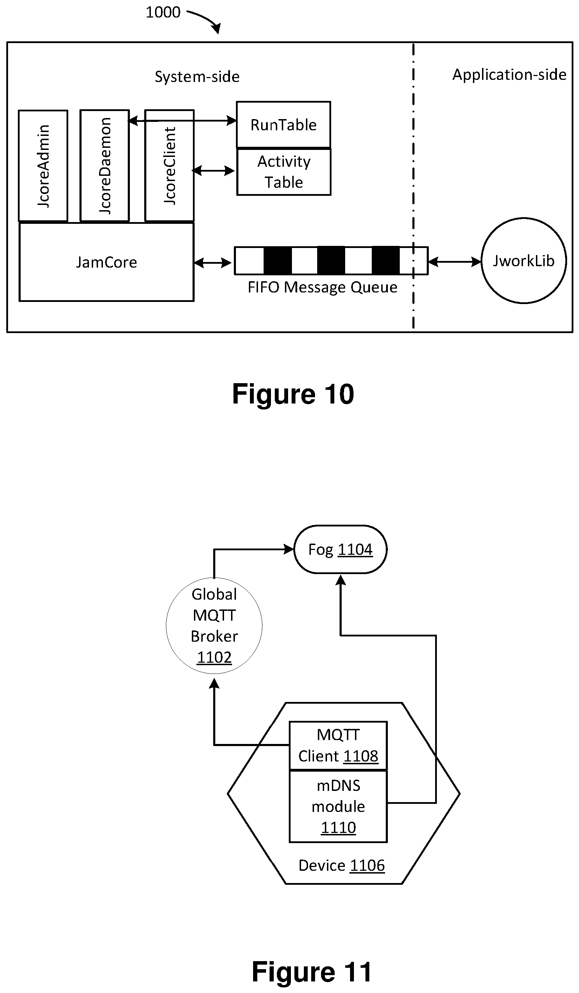

Figure 10 is a block diagram illustrating an architecture 1000 of a J side in JAMScript in accordance with the example implementations of some embodiments. As shown in Figure 10, the application side executes a user program. The system-side (also referred to as the J side) handles protocol processing, network configuration, and task status tracking. The two sides communicate through a FIFO message queue. JCoreAdmin, JWorklib, and JAMCore transmit and receive messages through a customized message queue, when external data is received.

Presently, JAMScript is designed to serve the need of software developers with access to IoT devices that need to offload computation-intensive tasks to a server; and for intelligent device manufacturers, such as car and drone manufacturers, to test and/or validate cross device collaboration.

JAMCore is a core component in the J side. JAMCore initializes the other components, such as JAMSys, JCoreAdmin, and JCoreDeamon. JAMCore also can hold a job queue that contains messages/tasks sent to the application side (also referred to as C side) workers. JAMCore also can handle communications between fog computing devices and a cloud computing device, and between client computing devices and local computing devices (e.g., fog devices). JAMScript can allow an ability to discover network computing devices and to detect network topology change. As a modular system, JAMScript can help in tracking task execution status in a remote environment.

To satisfy each device task's requirements, JAMScript can use non-preemptive ahead-of-time scheduling. Real-time tasks are local to a device: each device contains a different collection of real-time tasks with varying starting times and periods. Synchronous tasks are global: devices execute the same synchronous tasks at the same physical time. Ahead-of-time scheduling may have two advantages: (1) A static schedule to run for an extended period. Devices can operate even when the network is disconnected and they cannot download new schedules from the edge; and/or (2) System designers can evaluate tasks based on parameters such as period, priorities, duration, and others. Engineers can finetune a JAMScript scheduling algorithm to meet specific goals, such as throughput or CPU utilization.

Figure 11 is a block diagram of an architecture referred to herein as "JDiscovery" in a JAMScript framework of the example implementations that combines MQTT and mDNS. As shown in Figure 11, mDNS and MQTT communication schemes are integrated in the JDiscovery architecture. MQTT includes a global MQTT broker 1102 that runs on the cloud side. Client computing device 1106 includes MQTT client 1108 and mDNS module 1110. The client computing device 1106 level MQTT 1108 subscribes to topics posted by the fog device 1104 (e.g., via TCP/IP). On the other hand, mDNS communications rely on multicast UDP/IP packets in a local area network (LAN). To this end, JDiscovery used the Apple Bonjour Protocol, an open-source Avahi package. As the two communication protocols run simultaneously, the devices may be exposed to duplicated messages from MQTT and mDNS. Thus, in some embodiments, a deduplication process is included. The MQTT brokers in some embodiments perform two different operations: (1) Global key events discovery and dissemination; and/or (2) Local events discovery and dissemination.

The structure of JDiscovery in JAMScript for the implemented example embodiments included three major components: JRegistrar, MQTTRegistry, and mDNSRegistry. MQTTRegistry and mDNSRegistry handled the actual discovery operation through MQTT and mDNSRegistry, whereas JRegistrar had a role of exposing components to other JAMScript modules and contained an MQTTRegistry and mDNSRegistry instance.

MQTTRegistry and mDNSRegistry can inherit from the Registry object. The Registry is an asynchronous event call, also referred to herein as EventEmitter. The JRegistrar had the role of aggregating a MQTTRegistry object and mDNSRegistry object. In the example implementations, some of the commonly used exposing functions were: addAttribute(), removeAttribute() and discoverAttribute().

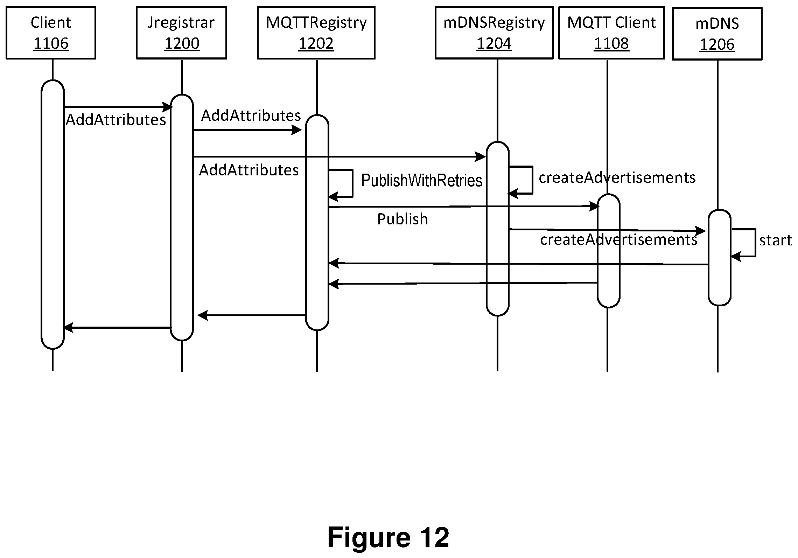

Figure 12 is a schematic diagram illustrating an example embodiment of runtime execution of a discovery library for how JDiscovery exposed an attribute in the example implementations. In the example embodiment of Figure 12, client computing device 1106 was willing to expose a list of attributes ('attrs') on the network. First, code of the client computing device 1106 called the addAttribute() function on MQTTRegistry 1202 and mDNSRegistry 1204.

The implementations of the example embodiments included a message filtering or selection process to avoid MQTT and mDNS message duplication. Every JDiscovery packet contained two parts: payload and deduplication identifier (dedupeId). In order to handle duplicated messages that may have originated from MQTT or mDNS, the deduplication process introduces a deduplication identifier that was a nano-second timestamp at the protocol level. This deduplicated identifier was generated when initializing an addAttributes() call, as illustrated in Figure 12. The higher resolution of the time identifier was implemented in the example embodiments based on a code excerpt "Deduplication identifier generation" shown below and the following formula:

$$dedupeId = f(process.hrtime)$$

Where the function f is the conversion into nanosecond resolution.
Code excerpt for "Deduplication identifier generation":

```
function _generateDedupeId(){
    //Use nanoseconds, higher resolution of time to avoid duplication
problems
    let hrTime = process.hrtime();
    const dedupeId = hdTime[0] * 1000000 + hrTime[1] / 1000;
    return dedupeId;
}
```

After the generation of the deduplication identifier, the JRegistrar 1200 used the deduplication identifier so that if the runtime records a message with a timestamp smaller than what the runtime receives from a later message, the later message will be accepted. The flow of this operation is illustrated in the following example embodiment of code "Message Filtering and Selection Process":

```
/*
return true if a discovery is a duplicate and false otherwise.
attr - the attribute for which s discovery was made
nodeId - the ID of the node for which the discovery was made
dedupeId - an ID that tells us if this message is a duplicated of not
*/
Registrar.prototype._isDuplicated = function(self, attr, nodeId, dedupeId){
    if(!self.discoveries.hasOwnProperty(attr)){
        return false;
    }
    if (!self.discoveries[attr].hasOwnProperty(nodeId)){
```

```
              return false;
        }
        // compare the dedupe ID of the last message with that if the current
message
        // because the dedupe IDs are timestamps, we say that a message is a
duplicate
        // if the ID is less than or equal to the last received
      if(dedupeId == 0 && self.discoveries[attr][nodeId] != 0){
            // the one exception is that a dedupeId of zero is used for the node
down events,
            // so we need to account for this special case.
            return false;
      return dedupeId >= self.discoveries[attr][nodeId];
  }
```

The first example embodiment of an implementation included one cloud computing device, one fog computing device, and one client computing device. A simulation of a disconnection between the cloud computing device and the fog computing device was performed. Up to three MQTT brokers were created in this example embodiment. One Primary MQTT broker with host 127.0.0.1 and port 18830; one backup MQTT broker with host 127.0.0.1 and port 18831; and a local pager with host 127.0.0.1 and port 18832.

Additionally, the first example embodiment simulated one cloud computing device, one fog computing device, and one client computing device. Three JDiscovery nodes connected to the primary MQTT broker during initialization, as connection logs were created.

A crash of the primary MQTT broker was simulated by shutting down the global MQTT broker. It was observed that the three devices reconnected to the backup broker. Then, a backup MQTT broker crash was simulated, leading to a fog-cloud connection failure. Immediately, the reconnection to the pager was initiated, and the connection was observed. Additionally, the cloud computing device monitored the global MQTT broker status.

The last phase of the first example embodiment was when the global MQTT broker was re-enabled. The cloud computing device detected that the primary MQTT broker was online (that is, broadcasted availability status), and then the fog computing device and client computing device reconnected to the primary MQTT broker.

The second example embodiment of an implementation included one cloud computing device, one fog computing device, and three client computing devices, and included a cloud-fog disconnection with multiple devices. The cloud computing device, fog computing device, three client computing devices, and various brokers were setup. First, three MQTT brokers were setup: Primary MQTT broker: 127.0.0.1:18830; Backup MQTT broker: 127.0.0.1:18831; and Local pager: 127.0.0.1:18832. Second, the cloud computing device, fog computing device, and three client computing devices were setup.

A simulation of a cloud-fog disconnection with the multiple client computing devices was performed. The execution flow was the same as used in the first example embodiment. The cloud computing device, the fog computing device, and the three client computing devices connected to the primary broker on startup. They then switched to the backup broker once their primary broker connections failed, and they fell back to the pager connection after the backup connections failed. The cloud computing device did not connect to the pager, but instead, it listened for global broker connections. The whole system recovered to global broker connections once either of the two global brokers was online.

The third example embodiment of an implementation included one cloud computing device, two fog computing devices, and three client computing devices on each fog computing device. A simulation was performed of a cloud-fog disconnection with the multiples fog computing devices and multiple client computing devices.

Up to six devices were simulated for three client computing devices on each fog computing device. First, four MQTT brokers were created: a primary MQTT broker: 127.0.0.1:18830; a backup MQTT broker: 127.0.0.1:18831; a local pager 1 for a first fog computing device: 127.0.0.1:18832; a local pager 2 for a second fog computing device: 127.0.0.1:18833. Second, one cloud computing device, two fog computing devices, and six client computing devices were simulated: "device", "device2", "device3" connected to the first fog computing device, and "device4", "device5", "device6" connected to the second fog computing device.

The execution flow was the same as used in the first and second example embodiments. Each pager received three connections after both global brokers disconnected.

The fourth example embodiment of an implementation included one cloud computing device, two fog computing devices, and one moving client computing device. A simulation was performed of a cloud-fog disconnection and client computing device mobility.

First, four MQTT brokers were created: a primary MQTT broker: 127.0.0.1:18830; a backup MQTT broker: 127.0.0.1:18831; a local pager 1 for a first fog computing device: 127.0.0.1:18832; a local pager 2 for a second fog computing device: 127.0.0.1:18833.

A client computing device reconnected to the local MQTT broker of the first fog computing device. The client computing device reconnected to the second fog computing device. As a result, the pager address in the client computing device was updated. The client computing device reconnected to the pager of the second fog computing device rather than to the first fog computing device. The fourth example embodiment illustrated how the JDiscovery module supports device mobility in the discovery process: Every time the client computing device reconnected to a new fog computing device, the client computing device discovered a new pager address and locally stored it in a case of a global broker failure.

The fifth example embodiment of an implementation included a high availability simulation where a client computing device determined/predicted the closest fog computing device and connected to that fog computing device. In the fifth example embodiment, high availability was achieved using a Euclidian distance at the client computing device to select the closest fog computing device. The Euclidian distance function helped to determine/predict the closest fog computing device and set the pager. One cloud computing device, one fog computing device, and one client computing device were setup. The client computing device detected a unique fog computing device as the closest fog computing device. This fog computing device identifier was set as local MQTT broker/pager. Next, a second fog computing device at a different location (longitude/latitude) was set in the cloud computing device. The cloud computing device broadcasted this second fog computing device. The client computing device used the Euclidian distance function to find the closest fog computing device.

Based on inclusion of MQTT and mDNS, various embodiments of the present disclosure may ensure reliability/continuity of an edge computing application (e.g., an IoT application) operation as a communication link between a local computing device (e.g., a fog device, an edge device, a base station, etc.) and a cloud computing device (e.g., a server) is disabled. In adverse conditions (e.g., link failure, broker crash, etc.), the integration of MQTT and mDNS, redundancy of a primary MQTT broker, and fallback operations may maintain application operation.

Some embodiments include:

1. Discovery and data communication of a given edge computing application is based on the combination of MQTT and mDNS protocols (e.g., JDiscovery in JAMScript in the example embodiments of implementations).
2. Redundancy by running in parallel two global MQTT brokers: a primary global MQTT broker and a backup MQTT broker hosted in the cloud.
3. Operations to address duplicated messaging from MQTT and mDNS using a timestamp of an attribute generated by the client computing device. Key events filtering and local all events flooding may be included.
4. Local computing devices host a local MQTT broker (also referred to as a pager) that can help operation during a disconnection with the cloud or failure of a global MQTT broker. Last Will and Testament and retained messages may be included to get key events. Based on the MQTTs, global and local events can be monitored and the events can be coordinated. Using MQTT, events may be disseminated efficiently in a local pager with message flooding scope restricted to the subscriber base.
5. A fallback operation to handle situations where connection between a local computing device and cloud computing device is down to avoid stoppage of operations. Based on inclusion of a Global - Local - Global switch that may be seamless, notification may be provided about key events at a global scale when connected and a local scale when not connected.
6. Reconnection operations by allowing a cloud computing device to monitor the pager and setting up a connection with a local computing device when a primary or backup global broker is recovered. Thus, when not connected, a key event is in place with respect to global entities being tracked.
7. Efficient switching from Global - Local - Global MQTT brokers (also referred to herein as GLG Switch) using two ML models. A GLG switch can include the following operations:

   o Detecting that global connectivity is breaking based on a ML model as the global connectivity awareness process.
   o Detecting a local pager that is available in the area of the connected client computing device based on using a ML model.
   ○ Detecting that global connectivity is going to resume.

8. In a mobility scenario, a ML model is included that can assist the client computing device based on determining/predicting the closest pager available (e.g., a fog computing device) in case a global MQTT broker fails. Features include a position of a local computing device identifier (e.g., Host, IP address, Longitude, Latitude), and the speed, direction, and/or location of the client computing device.
9. A ML model to determine/predict if the global connectivity (in other words, connection between a local computing device and a cloud computing device, or global MQTT, is not accessible) will end. Features include RSSI, coordinates and time, and previous local computing device status.

In some embodiments, combined MQTT and mDNS may ensure reliable cloud computing device/local computing device/client computing device operation in a heterogeneous network and edge computing applications. Handling of duplicate messages from MQTT and mDNS may be included.

Some embodiments include online and real-time decisions when a local-cloud connection fails. Redundancy with a backup MQTT broker may be included to protect primary MQTT broker issues.

A fallback operation is included in some embodiments, which may maintain operation of a client computing device when a local-cloud connection is down by allowing connection to a local MQTT broker. Reconnection may be included to resume the operation when the primary MQTT broker becomes available.

Some embodiments may accelerate the development of an edge computing application in an adverse (e.g., heterogeneous) environment as a foundation for device-to-device (D2D) communication application development. Some embodiments may include application of methods of the present disclosure to D2D communication when the devices are equipped to support Ad-hoc communication.

Some embodiments include clustering as another MQTT capability that can be used where brokers support a full distributed setup. mDNS can support MQTT so that all brokers in a cluster behave the same way and, thus, fault-tolerance may be achieved.

The mDNS and MQTT discovery operations of some embodiments can simultaneously operate in LAN and WAN. As a consequence of this dual discovery, methods of the present disclosure may be applicable for fast-changing network conditions where an internet connection might randomly fail, but the system needs to resume operations.

Client computing device (e.g., IoT device) discovery is supported in some embodiments without the presence of internet connections or central devices. To the contrary, many other approaches for IoT discovery may need a local service host (e.g., on a personal computer) or a cloud service (e.g., Amazon Web Services (AWS)).

When a failure occurs, in some embodiments, another device(s) takes over, thus, reducing the chance of downtime and increasing uptime may be accomplished. Operations are included in some embodiments for high availability of an edge computing application to handle client computing device (e.g., an IoT device) mobility. Such high availability may be achieved by allowing the client computing device to determine/predict the closest local MQTT broker located in the closest local computing device using a ML model. The determination/prediction of the closest local computing device is based on a ML model that can use the client computing device speed, location, and/or direction and the local computing device identifier, Host, longitude, and/or latitude.

Some embodiments include global connectivity monitoring and detection using a ML model.

Some embodiments allow an edge computing application to adapt its operational parameters to respond to user needs, or to address changing environmental conditions. A ML model can learn from adaptations and can exploit the knowledge obtained to execute future decisions.

For ease of discussion, example embodiments herein are explained in the non-limiting context of implementations in JAMScript of availability of an edge computing application during a cloud computing device disconnection. The present disclosure, however, is not so limited and includes, without limitation, a communication system that includes heterogenous communication links such as IoT interconnects with of heterogeneous devices and services over the internet or a wireless network for various numbers of applications. Heterogeneous communication links can be wired, cellular, wireless, and/or Ad-Hoc at each level of a layer.

Figure 13 illustrates specific examples of how computing device 1300 (e.g., client computing device, local computing device, and/or cloud computing device) may be implemented in certain embodiments of the present disclosure including: (1) a special-purpose computing device 1302 that uses custom processing circuits such as application-specific integrated-circuits (ASICs) and a proprietary operating system (OS); and (2) a general purpose computing device 1304 that uses commercia off the shelf (COTS) processors and a standard OS which has been configured to provide one or more of the features or functions disclosed herein.

Special-purpose computing device 1302 includes hardware 1310 comprising processor(s) 1312, and interface 1316, as well as memory 1318 having stored therein software 1320. In one embodiment, the software 1320 implements the modules described with regard to the previous figures. During operation, the software 1320 may be executed by the hardware 1310 to instantiate a set of one or more software instance(s) 1322. Each of the software instance(s) 1322, and that part of the hardware 1310 that executes that software instance (be it hardware dedicated to that software instance, hardware in which a portion of available physical resources (e.g., a processor core) is used, and/or time slices of hardware temporally shared by that software instance with others of the software instance(s) 1322), form a separate virtual network element 1330A-R. Thus, in the case where there are multiple virtual network elements 1330A-R, each operates as one of the computing devices from the preceding figures.

Returning to Figure 13, the example general purpose computing device 1304 includes hardware 1340 comprising a set of one or more processor(s) 1342 (which are often COTS processors) and interface 1346 , as well as memory 1348 having stored therein software 1350. During operation, the processor(s) 1342 execute the software 1350 to instantiate one or more sets of one or more applications 1364A-R (e.g., edge computing applications). While certain embodiments do not implement virtualization, alternative embodiments may use different forms of virtualization. For example, in certain alternative embodiments virtualization layer 1354 represents the kernel of an operating system (or a shim executing on a base operating system) that allows for the creation of multiple instances 1362A-R called software containers that may each be used to execute one (or more) of the sets of applications 1364A-R. In this embodiment, software containers 1362A-R (also called virtualization engines, virtual private servers, or jails) are user spaces (typically a virtual memory space) that may be separate from each other and separate from the kernel space in which the operating system is run. In certain embodiments, the set of applications running in a given user space, unless explicitly allowed, may be prevented from accessing the memory of the other processes. In other such alternative embodiments virtualization layer 1354 may represent a hypervisor (sometimes referred to as a virtual machine monitor (VMM)) or a hypervisor executing on top of a host operating system; and each of the sets of applications 1364A-R may run on top of a guest operating system within an instance 1362A-R called a virtual machine (which in some cases may be considered a tightly isolated form of software container that is run by the hypervisor). In certain embodiments, one, some or all of the applications are implemented as unikernel(s), which can be generated by compiling directly with an application only a limited set of libraries (e.g., from a library operating system (LibOS) including drivers/libraries of OS services) that provide the particular OS services needed by the application. As a unikernel can be implemented to run directly on hardware 1340, directly on a hypervisor (in which case the unikernel is sometimes described as running within a LibOS virtual machine), or in a software container, embodiments can be implemented fully with unikernels running directly on a hypervisor represented by virtualization layer 1354, unikernels running within software containers represented by instances 1362A-R, or as a combination of unikernels and the above-described techniques (e.g., unikernels and virtual machines both run directly on a hypervisor, unikernels and sets of applications that are run in different software containers).

The instantiation of the one or more sets of one or more applications 1364A-R, as well as virtualization if implemented are collectively referred to as software instance(s) 1352. Each set of applications 1364A-R, corresponding virtualization construct (e.g., instance 1362A-R) if implemented, and that part of the hardware 1340 that executes them (be it hardware dedicated to that execution and/or time slices of hardware temporally shared by software containers 1362A-R), forms a separate virtual network element(s) 1360A-R.

The virtual network element(s) 1360A-R perform similar functionality to the virtual network element(s) 1330A-R. This virtualization of the hardware 1340 is sometimes referred to as network function virtualization (NFV)). Thus, NFV may be used to consolidate many network equipment types onto industry standard high volume server hardware, physical switches, and physical storage, which could be located in for example data centers and customer premise equipment (CPE). However, different embodiments of the invention may implement one or more of the software container(s) 1362A-R differently. While embodiments of the invention are illustrated with each instance 1362A-R corresponding to one VNE 1360A-R, alternative embodiments may implement this correspondence at a finer level granularity; it should be understood that the techniques described herein with reference to a correspondence of instances 1362A-R to VNEs also apply to embodiments where such a finer level of granularity and/or unikernels are used.

The third example computing device implementation in Figure 13 is a hybrid computing device 1306, which includes both custom ASICs/proprietary OS and COTS processors/standard OS in a single ND or a single card within an ND. In certain embodiments of such a hybrid computing device, a platform virtual machine (VM), such as a VM that that implements the functionality of the special-purpose computing device 1302, could provide for para-virtualization to the hardware present in the hybrid computing device 1306.

Figure 14 shows a client computing device 1400 in accordance with some embodiments. A client computing device may support device-to-device (D2D) communication, for example by implementing a 3GPP standard for sidelink communication, Dedicated Short-Range Communication (DSRC), vehicle-to-vehicle (V2V), vehicle-to-infrastructure (V2I), or vehicle-to-everything (V2X). In other examples, a client computing device may not necessarily have a user in the sense of a human user who owns and/or operates the relevant device. Instead, a client computing device may represent a device that is intended for sale to, or operation by, a human user but which may not, or which may not initially, be associated with a specific human user (e.g., a smart sprinkler controller). Alternatively, a client computing device may represent a device that is not intended for sale to, or operation by, an end user but which may be associated with or operated for the benefit of a user (e.g., a smart power meter).

The client computing device 1400 includes processing circuitry 1402 that is operatively coupled via a bus 1404 to an input/output interface 1406, a power source 1408, a memory 1410, a communication interface 1412, and/or any other component, or any combination thereof. Certain client computing device may utilize all or a subset of the components shown in Figure 14. The level of integration between the components may vary from one client computing device to another client computing device. Further, certain client computing devices may contain multiple instances of a component, such as multiple processors, memories, transceivers, transmitters, receivers, etc.

The processing circuitry 1402 is configured to process instructions and data and may be configured to implement any sequential state machine operative to execute instructions stored as machine-readable computer programs in the memory 1410. The processing circuitry 1402 may be implemented as one or more hardware-implemented state machines (e.g., in discrete logic, field-programmable gate arrays (FPGAs), application specific integrated circuits (ASICs), etc.); programmable logic together with appropriate firmware; one or more stored computer programs, general-purpose processors, such as a microprocessor or digital signal processor (DSP), together with appropriate software; or any combination of the above. For example, the processing circuitry 1402 may include multiple central processing units (CPUs).

In the example, the input/output interface 1406 may be configured to provide an interface or interfaces to an input device, output device, or one or more input and/or output devices. Examples of an output device include a speaker, a sound card, a video card, a display, a monitor, a printer, an actuator, an emitter, a smartcard, another output device, or any combination thereof. An input device may allow a user to capture information into the client computing device 1400. Examples of an input device include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, a biometric sensor, etc., or any combination thereof. An output device may use the same type of interface port as an input device. For example, a Universal Serial Bus (USB) port may be used to provide an input device and an output device.

In some embodiments, the power source 1408 is structured as a battery or battery pack. Other types of power sources, such as an external power source (e.g., an electricity outlet), photovoltaic device, or power cell, may be used. The power source 1408 may further include power circuitry for delivering power from the power source 1408 itself, and/or an external power source, to the various parts of the client computing device 1400 via input circuitry or an interface such as an electrical power cable. Delivering power may be, for example, for charging of the power source 1408. Power circuitry may perform any formatting, converting, or other modification to the power from the power source 1408 to make the power suitable for the respective components of the client computing device 1400 to which power is supplied.

The memory 1410 may be or be configured to include memory such as random access memory (RAM), read-only memory (ROM), programmable read-only memory (PROM), erasable programmable read-only memory (EPROM), electrically erasable programmable read-only memory (EEPROM), magnetic disks, optical disks, hard disks, removable cartridges, flash drives, and so forth. In one example, the memory 1410 includes one or more application programs 1414, such as an operating system, web browser application, a widget, gadget engine, or other application, and corresponding data 1416. The memory 1410 may store, for use by the client computing device 1400, any of a variety of various operating systems or combinations of operating systems.

The memory 1410 may be configured to include a number of physical drive units, such as redundant array of independent disks (RAID), flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as tamper resistant module in the form of a universal integrated circuit card (UICC) including one or more subscriber identity modules (SIMs), such as a USIM and/or ISIM, other memory, or any combination thereof. The UICC may for example be an embedded UICC (eUICC), integrated UICC (iUICC) or a removable UICC commonly known as 'SIM card.' The memory 1410 may allow the client computing device 1400 to access instructions, application programs and the like, stored on transitory or non-transitory memory media, to off-load data, or to upload data. An article of manufacture, such as one utilizing a communication system may be tangibly embodied as or in the memory 1410, which may be or comprise a device-readable storage medium.

The processing circuitry 1402 may be configured to communicate with an access network or other network using the communication interface 1412. The communication interface 1412 may comprise one or more communication subsystems and may include or be communicatively coupled to an antenna 1422. The communication interface 1412 may include one or more transceivers used to communicate, such as by communicating with one or more remote transceivers of another device capable of wireless communication (e.g., another client computing device or a network node in an access network). Each transceiver may include a transmitter 1418 and/or a receiver 1420 appropriate to provide network communications (e.g., optical, electrical, frequency allocations, and so forth). Moreover, the transmitter 1418 and receiver 1420 may be coupled to one or more antennas (e.g., antenna 1422) and may share circuit components, software, or firmware, or alternatively be implemented separately.

In the illustrated embodiment, communication functions of the communication interface 1412 may include cellular communication, Wi-Fi communication, LPWAN communication, data communication, voice communication, multimedia communication, short-range communications such as Bluetooth, near-field communication, location-based communication such as the use of the global positioning system (GPS) to determine a location, another like communication function, or any combination thereof. Communications may be implemented in according to one or more communication protocols and/or standards, such as IEEE 802.11, Code Division Multiplexing Access (CDMA), Wideband Code Division Multiple Access (WCDMA), GSM, LTE, New Radio (NR), UMTS, WiMax, Ethernet, transmission control protocol/internet protocol (TCP/IP), synchronous optical networking (SONET), Asynchronous Transfer Mode (ATM), QUIC, Hypertext Transfer Protocol (HTTP), and so forth.

Regardless of the type of sensor, a client computing device may provide an output of data captured by its sensors, through its communication interface 1412, via a wireless connection to a network node. Data captured by sensors of a client computing device can be communicated through a wireless connection to a device/network node via another client computing device. The output may be periodic (e.g., once every 15 minutes if it reports the sensed temperature), random (e.g., to even out the load from reporting from several sensors), in response to a triggering event (e.g., when moisture is detected an alert is sent), in response to a request (e.g., a user initiated request), or a continuous stream (e.g., a live video feed of a patient).

As another example, a client computing device comprises an actuator, a motor, or a switch, related to a communication interface configured to receive wireless input from a device/network node via a wireless connection. In response to the received wireless input the states of the actuator, the motor, or the switch may change. For example, the client computing device may comprise a motor that adjusts the control surfaces or rotors of a drone in flight according to the received input or to a robotic arm performing a medical procedure according to the received input.

A client computing device, when in the form of an IoT device, may be a device for use in one or more application domains, these domains comprising, but not limited to, city wearable technology, extended industrial application and healthcare. Non-limiting examples of such an IoT device are a device which is or which is embedded in: a connected refrigerator or freezer, a TV, a connected lighting device, an electricity meter, a robot vacuum cleaner, a voice controlled smart speaker, a home security camera, a motion detector, a thermostat, a smoke detector, a door/window sensor, a flood/moisture sensor, an electrical door lock, a connected doorbell, an air conditioning system like a heat pump, an autonomous vehicle, a surveillance system, a weather monitoring device, a vehicle parking monitoring device, an electric vehicle charging station, a smart watch, a fitness tracker, a head-mounted display for Augmented Reality (AR) or Virtual Reality (VR), a wearable for tactile augmentation or sensory enhancement, a water sprinkler, an animal- or item-tracking device, a sensor for monitoring a plant or animal, an industrial robot, an Unmanned Aerial Vehicle (UAV), and any kind of medical device, like a heart rate monitor or a remote controlled surgical robot. A UE in the form of an IoT device comprises circuitry and/or software in dependence of the intended application of the IoT device in addition to other components as described in relation to the client computing device 1400 shown in Figure 14.

As yet another specific example, in an IoT scenario, a client computing device may represent a machine or other device that performs monitoring and/or measurements, and transmits the results of such monitoring and/or measurements to another client computing device and/or a computing device/device/network node. The client computing device may in this case be an M2M device, which may in a 3GPP context be referred to as an MTC device. As one particular example, the client computing device may implement the 3GPP NB-IoT standard. In other scenarios, a client computing device may represent a vehicle, such as a car, a bus, a truck, a ship and an airplane, or other equipment that is capable of monitoring and/or reporting on its operational status or other functions associated with its operation.

In practice, any number of client computing devices may be used together with respect to a single use case. For example, a first client computing device might be or be integrated in a drone and provide the drone's speed information (obtained through a speed sensor) to a second client computing device that is a remote controller operating the drone. When the user makes changes from the remote controller, the first client computing device may adjust the throttle on the drone (e.g. by controlling an actuator) to increase or decrease the drone's speed. The first and/or the second client computing device can also include more than one of the functionalities described above. For example, a client computing device might comprise the sensor and the actuator, and handle communication of data for both the speed sensor and the actuators.

Although the devices described herein may include the illustrated combination of hardware components, other embodiments may comprise computing devices with different combinations of components. It is to be understood that these devices may comprise any suitable combination of hardware and/or software needed to perform the tasks, features, functions, and methods disclosed herein. Determining, calculating, obtaining or similar operations described herein may be performed by processing circuitry, which may process information by, for example, converting the obtained information into other information, comparing the obtained information or converted information to information stored in the device, and/or performing one or more operations based on the obtained information or converted information, and as a result of said processing making a determination. Moreover, while components are depicted as single boxes located within a larger box, or nested within multiple boxes, in practice, devices may comprise multiple different physical components that make up a single illustrated component, and functionality may be partitioned between separate components. For example, a communication interface may be configured to include any of the components described herein, and/or the functionality of the components may be partitioned between the processing circuitry and the communication interface. In another example, non-computationally intensive functions of any of such components may be implemented in software or firmware and computationally intensive functions may be implemented in hardware.

In certain embodiments, some or all of the functionality described herein may be provided by processing circuitry executing instructions stored on in memory, which in certain embodiments may be a computer program product in the form of a non-transitory computer-readable storage medium. In alternative embodiments, some or all of the functionality may be provided by the processing circuitry without executing instructions stored on a separate or discrete device-readable storage medium, such as in a hard-wired manner. In any of those particular embodiments, whether executing instructions stored on a non-transitory computer-readable storage medium or not, the processing circuitry can be configured to perform the described functionality. The benefits provided by such functionality are not limited to the processing circuitry alone or to other components of the computing device, but are enjoyed by the computing device as a whole, and/or by a wireless network generally.

Further definitions and embodiments are discussed below.

In the above-description of various embodiments of present inventive concepts, it is to be understood that the terminology used herein is for the purpose of describing particular embodiments only and is not intended to be limiting of present inventive concepts. Unless otherwise defined, all terms (including technical and scientific terms) used herein have the same meaning as commonly understood by one of ordinary skill in the art to which present inventive concepts belong. It will be further understood that terms, such as those defined in commonly used dictionaries, should be interpreted as having a meaning that is consistent with their meaning in the context of this specification and the relevant art and will not be interpreted in an idealized or overly formal sense unless expressly so defined herein.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" (abbreviated "/") includes any and all combinations of one or more of the associated listed items.

It will be understood that although the terms first, second, third, etc. may be used herein to describe various elements/operations, these elements/operations should not be limited by these terms. These terms are only used to distinguish one element/operation from another element/operation. Thus a first element/operation in some embodiments could be termed a second element/operation in other embodiments without departing from the teachings of present inventive concepts. The same reference numerals or the same reference designators denote the same or similar elements throughout the specification.

As used herein, the terms "comprise", "comprising", "comprises", "include", "including", "includes", "have", "has", "having", or variants thereof are open-ended, and include one or more stated features, integers, elements, steps, components, or functions but does not preclude the presence or addition of one or more other features, integers, elements, steps, components, functions, or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks. Accordingly, embodiments of present inventive concepts may be embodied in hardware and/or in software (including firmware, resident software, microcode, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts. Moreover, although some of the diagrams include arrows on communication paths to show a primary direction of communication, it is to be understood that communication may occur in the opposite direction to the depicted arrows.

Many variations and modifications can be made to the embodiments without substantially departing from the principles of the present inventive concepts. All such variations and modifications are intended to be included herein within the scope of present inventive concepts. Accordingly, the above disclosed subject matter is to be considered illustrative, and not restrictive, and the examples of embodiments are intended to cover all such modifications, enhancements, and other embodiments, which fall within the scope of present inventive concepts. Thus, to the maximum extent allowed by law, the scope of present inventive concepts are to be determined by the broadest permissible interpretation of the present disclosure including the examples of embodiments and their equivalents, and shall not be restricted or limited by the foregoing detailed description.

**Claims**

1. A computer-implemented method performed by a client computing device for locating an access point to an edge computing application deployed at a local network or at a central cloud to switch to in the event that a first connection between the client computing device and a cloud computing device disconnects, the method comprising:

   determining (600) with a first machine learning, ML, model that the first connection between the cloud computing device and the client computing device will disconnect, wherein the cloud computing device comprises a first broker handling message queuing telemetry transport, MQTT, operations;
   receiving (602) an identification of a plurality of local computing devices through a multicast domain name service, mDNS;
   determining (604), with a second ML model, an identity of a local computing device from the plurality of local computing devices for the client computing device to switch to responsive to the cloud computing device disconnection, wherein the identified local computing device is the access point and comprises a second broker to handle the MQTT operations when the cloud computing device disconnects; and
   switching (608) to a second connection with the identified local computing device responsive to a disconnection of the first connection.

2. The method of Claim 1, further comprising: switching (616) to a connection with cloud computing device when the first connection resumes.

3. The method of any one of Claims 1 to 2, wherein the determining (600) with the first ML model comprises receiving first input data comprising at least one or more of (i) a change in a received power level between the cloud computing device and the client computing device, (ii) location coordinates and a corresponding time for the client computing device for the expected disconnection of the first connection, (iii) location coordinates and absence of a specific network infrastructure, and (iv) information shared by other local computing devices preceding the current local computing device, and outputting from the first ML model, based on the first input data, a status or probability that the first connection of the cloud computing device will disconnect.

4. The method of any one of Claims 1 to 3, further comprising: monitoring (612) connectivity with the local computing device to determine a connectivity status of the local computing device; and staying (614) connected to the identified local computing device when the connectivity status with the local computing device is acceptable.

5. The method of any one of Claims 1 to 4, wherein the determining (604) with the second ML model comprises receiving second input data comprising at least one or more of (i) an identification of respective identifiers for plurality of local computing devices, (ii) a position of the respective plurality of local computing device, and (ii) a speed, a direction, and/or a position of the client computing device, and outputting from the second ML model, based on the second input data, the identified local computing device for the client computing device to switch to based on a respective position and a reliability of an identifier for the identified local computing device.

6. The method of any one of Claims 1 to 5, wherein the disconnection of the first connection comprises at least one of (i) a network connection between the cloud computing device and the client computing device has dropped, and (ii) the cloud computing device is not responding.

7. The method of any one of Claims 1 to 6, further comprising: monitoring (618) connectivity with the cloud computing device to determine a connectivity status of the cloud computing device; and staying (620) connected to the cloud computing device when the connectivity status with the cloud computing device is acceptable.

8. The method of Claim 7, further comprising: resume monitoring (622) connectivity with the cloud computing device to determine a connectivity status of the cloud computing device.

9. The method of any one of Claims 1 to 8, wherein the cloud computing device, the local computing device, and the client computing device communications, respectively, include a deduplication identifier comprising a timestamp at a protocol level used to deduplicate messages that did not originate from a MQTT or a mDNS protocol.

10. The method of any one of Claims 1 to 9, wherein the client computing device further comprises an mDNS module.

11. The method of any one of Claims 1 to 10, wherein the client computing device comprises an Internet of Things, IoT, device.

12. The method of any one of Claims 1 to 11, wherein the local computing device comprise at least one of a fog computing device, an edge computing device, and a radio base station.

13. The method of any one of Claims 1 to 12, wherein the edge computing application comprises an Internet of Things, IoT, application.

14. A client computing device (706, 1300, 1400), the client computing device comprising:

processing circuitry (1312, 1342, 1402);
memory (1318, 1348, 1410) coupled with the processing circuitry, wherein the memory includes instructions that when executed by the processing circuitry causes the client computing device to perform operations comprising:

determine, with a first machine learning, ML, model, that a first connection between the cloud computing device and the client computing device will disconnect, wherein the cloud computing device comprises a first broker handling message queuing telemetry transport, MQTT, operations;
receive an identification of a plurality of local computing devices through a multicast domain name service, mDNS;
determine, with a second ML model, an identity of a local computing device from the plurality of local computing devices for the client computing device to switch to responsive to the cloud computing device disconnection, wherein the identified local computing device is an access point for an edge computing application and comprises a second broker to handle the MQTT operations when the cloud computing device disconnects; and
switch to a second connection with the identified local computing device responsive to a disconnection of the first connection.

15. The client computing device of Claim 14, wherein the memory includes instructions that when executed by the processing circuitry causes the client computing device to perform further operations comprising any of the operations of any one of Claims 2 to 13.


**Patentansprüche**

1. Ein rechnerimplementiertes Verfahren, das von einer Client-Rechenvorrichtung durchgeführt wird, um einen Zugangspunkt zu einer Edge-Rechenanwendung zu finden, die in einem lokalen Netzwerk oder in einer zentralen Cloud eingesetzt wird, um im Falle einer Trennung einer ersten Verbindung zwischen der Client-Rechenvorrichtung und einer Cloud-Rechenvorrichtung darauf umzuschalten, wobei das Verfahren Folgendes beinhaltet:

Bestimmen (600), mit einem ersten Maschinenlernmodell, ML-Modell, dass die erste Verbindung zwischen der Cloud-Rechenvorrichtung und der Client-Rechenvorrichtung getrennt wird, wobei die Cloud-Rechenvorrichtung einen ersten Broker beinhaltet, der MQTT-Operationen, MQTT = Message Queuing Telemetry Transport, handhabt; Empfangen (602) einer Identifikation einer Vielzahl von lokalen Rechenvorrichtungen über einen mDNS, mDNS = Multicast Domain Name Service;
Bestimmen (604), mit einem zweiten ML-Modell, einer Identität einer lokalen Rechenvorrichtung aus der Vielzahl von lokalen Rechenvorrichtungen, zu der die Client-Rechenvorrichtung als Reaktion auf die Trennung der Cloud-Rechenvorrichtung umschalten soll, wobei die identifizierte lokale Rechenvorrichtung der Zugangspunkt ist und einen zweiten Broker beinhaltet, um die MQTT-Operationen zu handhaben, wenn die Cloud-Rechenvorrichtung getrennt wird; und

Umschalten (608) auf eine zweite Verbindung mit der identifizierten lokalen Rechenvorrichtung als Reaktion auf eine Trennung der ersten Verbindung.

2. Verfahren gemäß Anspruch 1, das ferner Folgendes beinhaltet: Umschalten (616) auf eine Verbindung mit der Cloud-Rechenvorrichtung, wenn die erste Verbindung wiederaufgenommen wird.

3. Verfahren gemäß einem der Ansprüche 1 bis 2, wobei das Bestimmen (600) mit dem ersten ML-Modell Folgendes beinhaltet: Empfangen von ersten Eingabedaten, die mindestens eines oder mehrere von Folgendem beinhalten: (i) eine Änderung eines Empfangsleistungspegels zwischen der Cloud-Rechenvorrichtung und der Client-Rechenvorrichtung, (ii) Standortkoordinaten und eine entsprechende Zeit für die Client-Rechenvorrichtung für die erwartete Trennung der ersten Verbindung, (iii) Standortkoordinaten und das Fehlen einer spezifischen Netzwerkinfrastruktur und (iv) Informationen, die von anderen lokalen Rechenvorrichtungen geteilt werden, die der aktuellen lokalen Rechenvorrichtung vorausgehen, und Ausgeben eines Status oder einer Wahrscheinlichkeit, dass die erste Verbindung der Cloud-Rechenvorrichtung getrennt wird, aus dem ersten ML-Modell basierend auf den ersten Eingabedaten.

4. Verfahren gemäß einem der Ansprüche 1 bis 3, das ferner Folgendes beinhaltet: Überwachen (612) der Konnektivität mit der lokalen Rechenvorrichtung, um einen Konnektivitätsstatus der lokalen Rechenvorrichtung zu bestimmen; und Aufrechterhalten (614) der Verbindung mit der identifizierten lokalen Rechenvorrichtung, wenn der Konnektivitätsstatus mit der lokalen Rechenvorrichtung akzeptabel ist.

5. Verfahren gemäß einem der Ansprüche 1 bis 4, wobei das Bestimmen (604) mit dem zweiten ML-Modell Folgendes beinhaltet: Empfangen von zweiten Eingabedaten, die mindestens eines oder mehrere von Folgendem beinhalten: (i) eine Identifikation von jeweiligen Identifikatoren für die Vielzahl von lokalen Rechenvorrichtungen, (ii) eine Position der jeweiligen Vielzahl von lokalen Rechenvorrichtungen und (ii) eine Geschwindigkeit, eine Richtung und/oder eine Position der Client-Rechenvorrichtung, und Ausgeben der identifizierten lokalen Rechenvorrichtung aus dem zweiten ML-Modell basierend auf den zweiten Eingabedaten, zu der die Client-Rechenvorrichtung basierend auf einer jeweiligen Position und einer Zuverlässigkeit eines Identifikators für die identifizierte lokale Rechenvorrichtung umschalten soll.

6. Verfahren gemäß einem der Ansprüche 1 bis 5, wobei die Trennung der ersten Verbindung mindestens eines von Folgendem beinhaltet: (i) eine Netzwerkverbindung zwischen der Cloud-Rechenvorrichtung und der Client-Rechenvorrichtung ist unterbrochen und (ii) die Cloud-Rechenvorrichtung antwortet nicht.

7. Verfahren gemäß einem der Ansprüche 1 bis 6, das ferner Folgendes beinhaltet: Überwachen (618) der Konnektivität mit der Cloud-Rechenvorrichtung, um einen Konnektivitätsstatus der Cloud-Rechenvorrichtung zu bestimmen; und Aufrechterhalten (620) der Verbindung mit der Cloud-Rechenvorrichtung, wenn der Konnektivitätsstatus mit der Cloud-Rechenvorrichtung akzeptabel ist.

8. Verfahren gemäß Anspruch 7, das ferner Folgendes beinhaltet: Wiederaufnehmen des Überwachens (622) der Konnektivität mit der Cloud-Rechenvorrichtung, um einen Konnektivitätsstatus der Cloud-Rechenvorrichtung zu bestimmen.

9. Verfahren gemäß einem der Ansprüche 1 bis 8, wobei die Kommunikationen der Cloud-Rechenvorrichtung, der lokalen Rechenvorrichtung und der Client-Rechenvorrichtung jeweils einen Deduplizierungsidentifikator umfassen, der einen Zeitstempel auf einer Protokollebene beinhaltet, der zum Deduplizieren von Nachrichten verwendet wird, die nicht von einem MQTT- oder einem mDNS-Protokoll stammen.

10. Verfahren gemäß einem der Ansprüche 1 bis 9, wobei die Client-Rechenvorrichtung ferner ein mDNS-Modul beinhaltet.

11. Verfahren gemäß einem der Ansprüche 1 bis 10, wobei die Client-Rechenvorrichtung eine Vorrichtung des Internets der Dinge, IoT, beinhaltet.

12. Verfahren gemäß einem der Ansprüche 1 bis 11, wobei die lokale Rechenvorrichtung mindestens eine von einer Fog-Rechenvorrichtung, einer Edge-Rechenvorrichtung und einer Funkbasisstation beinhaltet.

13. Verfahren gemäß einem der Ansprüche 1 bis 12, wobei die Edge-Rechenanwendung eine Anwendung des Internets der Dinge, IoT, beinhaltet.

14. Eine Client-Rechenvorrichtung (706, 1300, 1400), wobei die Client-Rechenvorrichtung Folgendes beinhaltet:

eine Verarbeitungsschaltung (1312, 1342, 1402);
einen Speicher (1318, 1348, 1410), der mit der Verarbeitungsschaltung gekoppelt ist, wobei der Speicher Anweisungen umfasst, die bei Ausführung durch die Verarbeitungsschaltung die Client-Rechenvorrichtung veranlassen, Operationen durchzuführen, die Folgendes beinhalten:

Bestimmen, mit einem ersten Maschinenlernmodell, ML-Modell, dass eine erste Verbindung zwischen der Cloud-Rechenvorrichtung und der Client-Rechenvorrichtung getrennt wird, wobei die Cloud-Rechenvorrichtung einen ersten Broker beinhaltet, der MQTT-Operationen, MQTT = Message Queuing Telemetry Transport, handhabt;
Empfangen einer Identifikation einer Vielzahl von lokalen Rechenvorrichtungen über einen mDNS, mDNS = Multicast Domain Name Service;
Bestimmen, mit einem zweiten ML-Modell, einer Identität einer lokalen Rechenvorrichtung aus der Vielzahl von lokalen Rechenvorrichtungen, zu der die Client-Rechenvorrichtung als Reaktion auf die Trennung der Cloud-Rechenvorrichtung umschalten soll, wobei die identifizierte lokale Rechenvorrichtung ein Zugangspunkt für eine Edge-Rechenanwendung ist und einen zweiten Broker beinhaltet, um die MQTT-Operationen zu handhaben, wenn die Cloud-Rechenvorrichtung getrennt wird; und
Umschalten auf eine zweite Verbindung mit der identifizierten lokalen Rechenvorrichtung als Reaktion auf eine Trennung der ersten Verbindung.

15. Client-Rechenvorrichtung gemäß Anspruch 14, wobei der Speicher Anweisungen umfasst, die bei Ausführung durch die Verarbeitungsschaltung die Client-Rechenvorrichtung veranlassen, weitere Operationen durchzuführen, die eine beliebige der Operationen gemäß einem der Ansprüche 2 bis 13 beinhalten.

## Revendications

1. Un procédé mis en œuvre par ordinateur réalisé par un dispositif informatique client pour localiser un point d'accès à une application informatique en périphérie déployée au niveau d'un réseau local ou au niveau d'un cloud central vers lequel commuter dans le cas où une première connexion entre le dispositif informatique client et un dispositif informatique en cloud se déconnecte, le procédé comprenant :

la détermination (600) avec un premier modèle d'apprentissage machine, ML, que la première connexion entre le dispositif informatique en cloud et le dispositif informatique client va se déconnecter, dans lequel le dispositif informatique en cloud comprend un premier courtier gérant des opérations MQTT (Message *Queuing Telemetry Transport) ;*
la réception (602) d'une identification d'une pluralité de dispositifs informatiques locaux par l'intermédiaire d'un service mDNS (*multicast Domain Name Service*) ;
la détermination (604), avec un deuxième modèle ML, d'une identité d'un dispositif informatique local parmi la pluralité de dispositifs informatiques locaux vers lequel le dispositif informatique client doit commuter en réponse à la déconnexion du dispositif informatique en cloud, dans lequel le dispositif informatique local identifié est le point d'accès et comprend un deuxième courtier pour gérer les opérations MQTT lorsque le dispositif informatique en cloud se déconnecte ; et
la commutation (608) vers une deuxième connexion avec le dispositif informatique local identifié en réponse à une déconnexion de la première connexion.

2. Le procédé de la revendication 1, comprenant en outre : la commutation (616) vers une connexion avec un dispositif informatique en cloud lorsque la première connexion reprend.

3. Le procédé de n'importe laquelle des revendications 1 à 2, dans lequel la détermination (600) avec le premier modèle ML comprend la réception de premières données d'entrée comprenant au moins un ou plusieurs éléments parmi (i) un changement dans un niveau de puissance reçu entre le dispositif informatique en cloud et le dispositif informatique client, (ii) des coordonnées de localisation et un temps correspondant pour le dispositif informatique client pour la déconnexion attendue de la première connexion, (iii) des coordonnées de localisation et l'absence d'une infrastructure de réseau spécifique, et (iv) des informations partagées par d'autres dispositifs informatiques locaux précédant le dispositif informatique local actuel, et la sortie à partir du premier modèle ML, sur la base des premières données d'entrée, d'un statut ou d'une probabilité que la première connexion du dispositif informatique en cloud va se déconnecter.

4.  Le procédé de n'importe laquelle des revendications 1 à 3, comprenant en outre : la surveillance (612) d'une connectivité avec le dispositif informatique local pour déterminer un statut de connectivité du dispositif informatique local ; et le maintien (614) de la connexion au dispositif informatique local identifié lorsque le statut de connectivité avec le dispositif informatique local est acceptable.

5.  Le procédé de n'importe laquelle des revendications 1 à 4, dans lequel la détermination (604) avec le deuxième modèle ML comprend la réception de deuxièmes données d'entrée comprenant au moins un ou plusieurs éléments parmi (i) une identification d'identifiants respectifs pour une pluralité de dispositifs informatiques locaux, (ii) une position de la pluralité respective de dispositifs informatiques locaux, et (ii) une vitesse, une direction, et/ou une position du dispositif informatique client, et la sortie à partir du deuxième modèle ML, sur la base des deuxièmes données d'entrée, du dispositif informatique local identifié vers lequel le dispositif informatique client doit commuter sur la base d'une position respective et d'une fiabilité d'un identifiant pour le dispositif informatique local identifié.

6.  Le procédé de n'importe laquelle des revendications 1 à 5, dans lequel la déconnexion de la première connexion comprend au moins une situation parmi (i) celle où une connexion réseau entre le dispositif informatique en cloud et le dispositif informatique client a été abandonnée, et (ii) celle où le dispositif informatique en cloud ne répond pas.

7.  Le procédé de n'importe laquelle des revendications 1 à 6, comprenant en outre : la surveillance (618) d'une connectivité avec le dispositif informatique en cloud pour déterminer un statut de connectivité du dispositif informatique en cloud ; et le maintien (620) de la connexion au dispositif informatique en cloud lorsque le statut de connectivité avec le dispositif informatique en cloud est acceptable.

8.  Le procédé de la revendication 7, comprenant en outre : la reprise de la surveillance (622) d'une connectivité avec le dispositif informatique en cloud pour déterminer un statut de connectivité du dispositif informatique en cloud.

9.  Le procédé de n'importe laquelle des revendications 1 à 8, dans lequel les communications de dispositif informatique en cloud, de dispositif informatique local, et de dispositif informatique client, respectivement, incluent un identifiant de déduplication comprenant un horodatage à un niveau de protocole utilisé pour dédupliquer des messages n'émanant pas d'un protocole MQTT ou mDNS.

10. Le procédé de n'importe laquelle des revendications 1 à 9, dans lequel le dispositif informatique client comprend en outre un module mDNS.

11. Le procédé de n'importe laquelle des revendications 1 à 10, dans lequel le dispositif informatique client comprend un dispositif IoT (*Internet of Things,* Internet des objets).

12. Le procédé de n'importe laquelle des revendications 1 à 11, dans lequel le dispositif informatique local comprend au moins un dispositif d'entre un dispositif informatique en fog, un dispositif informatique en périphérie, et une station de base radio.

13. Le procédé de n'importe laquelle des revendications 1 à 12, dans lequel l'application informatique en périphérie comprend une application IoT (*Internet of Things*).

14. Un dispositif informatique client (706, 1300, 1400), le dispositif informatique client comprenant :

    une circuiterie de traitement (1312, 1342, 1402) ;
    une mémoire (1318, 1348, 1410) couplée à la circuiterie de traitement, dans lequel la mémoire inclut des instructions qui, lorsqu'elles sont exécutées par la circuiterie de traitement, amènent le dispositif informatique client à réaliser des opérations comprenant :

       la détermination, avec un premier modèle d'apprentissage machine, ML, qu'une première connexion entre le dispositif informatique en cloud et le dispositif informatique client va se déconnecter, dans lequel le dispositif informatique en cloud comprend un premier courtier gérant des opérations MQTT (*Message Queuing*

*Telemetry Transport)* ;

la réception d'une identification d'une pluralité de dispositifs informatiques locaux par l'intermédiaire d'un service mDNS (*multicast Domain Name Service*) ;

la détermination, avec un deuxième modèle ML, d'une identité d'un dispositif informatique local parmi la pluralité de dispositifs informatiques locaux vers lequel le dispositif informatique client doit commuter en réponse à la déconnexion du dispositif informatique en cloud, dans lequel le dispositif informatique local identifié est un point d'accès pour une application informatique en périphérie et comprend un deuxième courtier pour gérer les opérations MQTT lorsque le dispositif informatique en cloud se déconnecte ; et

la commutation vers une deuxième connexion avec le dispositif informatique local identifié en réponse à une déconnexion de la première connexion.

15. Le dispositif informatique client de la revendication 14, dans lequel la mémoire inclut des instructions qui, lorsqu'elles sont exécutées par la circuiterie de traitement, amènent le dispositif informatique client à réaliser des opérations supplémentaires comprenant n'importe lesquelles des opérations de n'importe laquelle des revendications 2 à 13.

Cloud 100

Fog Device 102b

Moving Fog Device 102a in Connected Bus 108

Smart Car 104a

UE 108

Fog Device 102c

Smart Car 104b

Fog Device 102d

Smart Car 104c

Connected Van 106

Sensor 110a

Sensor 110b

Sensor 110c

Sensor 110d

**Figure 1**

**Figure 2A**

**Figure 2B**

Where is Client 3?

Client 1

Where is Client 3?

Client 2

Where is Client 3?

Client 3 is at 192.168.1.15

Client 3

Client 4

# Figure 3

Publish: 24

MQTT Node
404a:
Subscriber

MQTT
Node 400:
Publisher

Publish to topic:
temperature

Publish: 24
degrees

MQTT
Broker 402

Subscribe to topic:
temperature

Publish: 24

MQTT Node
404b:
Subscriber

Subscribe to topic:
temperature

# Figure 4

**500**: Determine whether global connectivity will end?

NO

YES

**502**: Prepare to switch to local MQTT: Pager

**504**: Determine most reliable pager around IoT device. Discovered and queried using mDNS

NO

**506**: Pager Identifier found?

YES

**508a**: Ping global connectivity status; Good?

NO

YES

**510**: Switch to local MQTT Broker (Pager): G -> L

**512**: Stay on global MQTT broker

Resume Global Connectivity Monitoring

**508b**: Ping global connectivity status; Good?

NO

**514**: Stay on local MQTT broker (pager)

YES

Resume Normal Operation

**516**: Switch to global MQTT broker: L -> G

# Figure 5

**Figure 6**

**Figure 7**

**Figure 8**

**Figure 9**

1000

Figure 10

Figure 11

Figure 12

# Figure 13

CLIENT COMPUTING DEVICE 1400

| PROCESSING CIRCUITRY 1402 | INPUT/OUTPUT INTERFACE 1406 | POWER SOURCE 1408 |

BUS 1404

MEMORY 1410

APPLICATION PROGRAMS 1414

DATA 1416

COMMUNICATION INTERFACE 1412

TRANSMITTER 1418

RECEIVER 1420

ANTENNA 1422

# Figure 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RAMAO TIAGO et al.** Security Challenges in 5G-Based IoT Middleware Systems. *Internet of Things (IoT) in 5G Mobile Technologies*, 2016, 399-418
- **LEONARDO ALBERNAZ et al.** Middleware Technology for IoT systems: Challenges and Perspectives Toward 5G. *Internet of Things (IoT) in 5G Mobile Technologies*, 2016, 333-367
- Elastic Provisioning of Internet of Things Services Using Fog Computing: An Experience Report. **ZANNI ALESSANDRO et al.** 2018 6TH IEEE INTERNATIONAL CONFERENCE ON MOBILE CLOUD COMPUTING, SERVICES, AND ENGINEERING (MOBILECLOUD). IEEE, 26 March 2018, 17-22
- **KOUSTABH DOLUI** ; **SOUMYA KANTI DATTA**. Comparing of Edge Computing Implementation: Fog Computing, Cloudlet and Mobile Edge Computing. *IEEE Global Internet of Things Summit*, 2017
- **AVIZIENIS A et al.** Basic concepts and taxonomy of dependable and secure computing. *IEEE Transaction on Dependable and Secure Computing*, 2004
- **RAJKUMAR BUYYA** ; **AMIR VAHID DASTJERDI**. Internet of things, Principles and Paradigms. Elsevier, 2016
- **JORGE E. LIZURIAGA et al.** Handling Mobility in IoT Applications using the MQTT Protocol. *2015 Internet Technologies and Application (ITA)*, 2015
- **ASAD JAVED et al.** Edge Computing-based Fault-Tolerant Framework: A case Study on Vehicular Networks. *IEEE International Wireless Communications and Mobile Computing*, 2020
- O-MI/O-DF vs MQTT: A performance analysis. **PAUL-LOU BENEDICK et al.** Industrial Cyber-Physical Systems. IEEE, 2018
- **DEEPA RAJENDRA et al.** Enabling High Availability Edge Computing Platform. *IEEE international Conference on Mobile Cloud Computing, Services, and Engineering*, 2019
- **JITENDER GROVER** ; **RAMA MURTHY GARIMELLA**. Reliable and Fault-Tolerant IoT-Edge Architecture. *IEEE Sensors*, 2018
- **LUJIE TANG et al.** Reliable Mobile Edge Service Offloading Based on P2P Distributed Networks. *Symmetry Journal*, 2020, vol. 12, 821
- **JORGE E. LIZURIAGA et al.** Handling Mobility in IoT Applications using the MQTT Protocol. *2015 Internet Technologies and Application (ITA)*, 2015